# EUROPÄISCHE PATENTSCHRIFT

(11) **EP 4 310 349 B1**
(45) Veröffentlichungstag und Bekanntmachung des Hinweises auf die Patenterteilung: **29.01.2025**
(21) Anmeldenummer: 23185220.3
(22) Anmeldetag: 13.07.2023
(51) Int. Cl.: F16C 1/10, F16B 19/02

(54) **ARRETIERBOLZENSYSTEM MIT MEHREREN, ÜBER BOWDENZÜGE BETÄTIGTEN ARRETIERBOLZEN UND GEMEINSAMEM GRIFFSTÜCK**
LOCKING BOLT SYSTEM WITH SEVERAL LOCKING BOLTS OPERATED BY BOWDEN CABLES AND A COMMON GRIP
SYSTÈME DE BOULON DE VERROUILLAGE COMPRENANT UNE PLURALITÉ DE BOULONS DE VERROUILLAGE ACTIONNÉS PAR DES CÂBLES BOWDEN ET UNE POIGNÉE COMMUNE

(30) Priorität: 22.07.2022 DE 102022207530
(43) Veröffentlichungstag der Anmeldung: 24.01.2024
(73) Patentinhaber: ICG GmbH & Co. KG, 72172 Sulz am Neckar (DE)
(72) Erfinder: LEINS, Marco, 72184 Eutingen im Gäu (DE); Haug, André, 72160 Horb-Dettingen (DE)
(74) Vertreter: Kohler Schmid Möbus Patentanwälte

(56) Entgegenhaltungen:
- DE-U1- 202020 100 562
- DE-U1- 202020 104 546
- US-A- 3 831 406

## Beschreibung

Die Erfindung betrifft ein Bowdenzug-betätigtes Arretierbolzensystem.

Ein Bowdenzug-betätigtes Arretierbolzensystem ist beispielsweise bekannt geworden aus der DE 20 2020 104 546 U1, die auch als nächstkommender Stand der Technik angesehen wird.

Arretierbolzen können dazu eingesetzt werden, Bauteile gegen Querkräfte zu sichern. Eine Bolzenhülse ist typischerweise in einem ersten Bauteil (etwa einem Maschinenrahmen) befestigt, beispielsweise eingeschraubt, und greift mit einem in der Bolzenhülse verfahrbaren Sperrbolzen in einer ausgefahrenen Stellung mit einer vorderen Bolzenspitze in ein zweites Bauteil ein. Dadurch blockiert der Sperrbolzen ein Verfahren des zweiten Bauteils relativ zum ersten Bauteil quer zur Verfahrrichtung des Sperrbolzens.

Bei üblichen Arretierbolzen ist der Sperrbolzen mittels eines Handgriffteils, das am Sperrbolzen befestigt ist, gegen eine Federkraft in die Bolzenhülse hinein zurückziehbar, um das zweite Bauteil freizugeben.

In manchen Anwendungssituationen müssen jedoch Bauteile gegeneinander gesichert werden, die manuell schlecht zugänglich sind, insbesondere für einen manuellen Zugriff auf ein Handgriffteil, das unmittelbar am Sperrbolzen angeordnet ist. Dafür ist es bekannt geworden, einen Arrretierbolzen über einen Bowdenzug fernzubetätigen.

Die DE 20 2020 104 546 U1 beschreibt ein Arretierbolzensystem, bei dem ein Sperrbolzen, der in einer Bolzenhülse axial verfahrbar gelagert ist, mittels eines Bowdenzugs betätigbar ist. Ein vorderer Kopplungskörper, der an einer Seele des Bowdenzugs befestigt ist, ist an einem hinteren Ende des Sperrbolzens eingehakt. Eine Bowdenzug-Hülle stützt sich am hinteren Ende der Bolzenhülse ab. Eine Druckfeder stützt sich vorderenends an Sperrbolzen ab, und hinterenends an der Bolzenhülse, um den Sperrbolzen in eine ausgefahrene Position vorzuspannen. Über den Bowdenzug kann der Sperrbolzen in eine eingefahrene Position zurückgezogen werden. Eine Seele des Bowdenzugs ist dafür an ein Griffstück gekoppelt, wobei die Seele durch einen Axialteil des Griffstücks geführt und an der Seele ein Schraubnippel befestigt ist, der einen Kopplungsanschlag im Griffstück hintergreift, und die Bowdenzug-Hülle ist zudem über eine Becherschraube an der Griffstückhülse abgestützt. Der Axialteil ist in einer Griffstückhülse axial verschiebbar geführt, so dass das Griffstück gegenüber der Griffstückhülse in eine eingezogene Stellung oder herausgezogene Stellung verbracht werden kann. In einer Variante sind am Griffstück und an der Griffstückhülse jeweils Vorsprünge und Rücksprünge ausgebildet, wobei bei gegenseitigem Eingriff der Vorsprünge und Rücksprünge die eingezogene Stellung des Griffstücks eingenommen wird. Durch Zurückziehen des Griffstücks und Drehen des Griffstücks gegenüber der Griffstückhülse können die Vorsprünge aufeinander gesetzt werden, wodurch die zurückgezogene Stellung selbsttätig gehalten werden kann.

Aus der DE 20 2020 100 562 U1 ist ein weiteres Arretierbolzensystem mit Bowdenzug bekannt geworden, bei dem ein Sperrbolzen in einer Bolzenhülse axial verschiebbar gehalten ist, und der Sperrbolzen hinterenends aus der Bolzenhülse herausragt. Am hinteren Ende des Sperrbolzens ist eine Adapterhülse aufgeschraubt, in die der vordere Kopplungskörper eingehakt ist. Weiterhin ist auf der Bolzenhülse eine Überwurfhülse aufgeschraubt, die die Adapterhülse übergreift. Am hinteren Ende der Überwurfhülse ist ein Widerlager für die Bowdenzug-Hülle ausgebildet. Der Bowdenzug ist ähnlich wie in der DE 20 2020 104 546 beschrieben mit seiner Seele an ein Griffstück gekoppelt, das in einer Griffstückhülse axial verfahrbar ist, an der die Bowdenzug-Hülle abgestützt ist.

Bei diesen bekannten Arretierbolzensystemen können einzelne Arretierbolzen-Anordnungen über einen Bowdenzug mit einem einzelnen Griffstück fernbetätigt werden. In vielen Anwendungsfällen ist sind die gegeneinander zu sichernden Bauteile jedoch relativ groß, so dass für deren gegenseitige Sicherung mehrere Arretierbolzen eingesetzt werden. Um die gegenseitige Sicherung der Bauteile aufzuheben, muss ein Werker dann für jeden beteiligten Arretierbolzen das jeweilige Griffstück herausziehen, um über den zugehörigen Bowdenzug den jeweiligen Arretierbolzen in die eingefahrene Position zu verbringen. Dies ist relativ umständlich und zeitaufwändig. Möglicherweise sind sogar mehrere Werker nötig, um alle Griffstücke gleichzeitig ziehen zu können.

Beispielsweise aus der Internetveröffentlichung "Seilzugverteiler - prozesssicher und langlebig" der Firma JAKO MOTORSPORT, Hessisch-Oldendorf, DE, heruntergeladen am 29.6.2022 unter https://www.jako-motorsport.de/produkte/seilzugverteiler/ ist es bekannt geworden, die Wirkung eines ersten Bodenzugs auf zwei weitere Bowdenzüge zu koppeln. In einem Gehäuse ist ein Schlitten axial verschiebbar angeordnet. An einer axialen Seite ist die Seele des ersten Bowdenzugs am Schlitten befestigt und dessen Bowdenzug-Hülle am Gehäuse abgestützt. An der gegenüberliegenden axialen Seite sind die Seelen der weiteren Bowdenzüge am Schlitten befestigt und deren Bowdenzug-Hüllen sind am Gehäuse abgestützt. Die Installation eines solchen Zugverteilers ist jedoch relativ aufwändig.

Aus der US 3,831,406 ist ein fernbetätigbarer Entriegelungsmechanismus für Karosserieverschlüsse von Fahrzeugen bekannt geworden, wobei mit einem Griff zwei Bowdenzüge betätigt werden.

### Aufgabe der Erfindung

Es ist Aufgabe der Erfindung, bei geringem Aufwand eine Fernbetätigung von mehreren Arretierbolzen-Anordnungen, die gemeinsam zwei Bauteile gegen eine gegenseitige Verschiebung sichern, zu erleichtern.

### Beschreibung der Erfindung

Diese Aufgabe wird erfindungsgemäß gelöst durch ein Arretierbolzensystem gemäß Anspruch 1.

Das erfindungsgemäße Arretierbolzensystem umfasst
- wenigstens zwei Arretierbolzen-Anordnungen, jeweils mit einem Sperrbolzen, der in einer Bolzenhülse entlang einer Bolzenachse verfahrbar ist, und
- eine Betätigungsanordnung mit einem Griffstück, einer Griffstückhülse und wenigstens zwei Bowdenzügen,

wobei das Griffstück in der Griffstückhülse zwischen einer eingezogenen Stellung und einer herausgezogenen Stellung entlang einer Griffstückachse verfahrbar ist, und insbesondere unverlierbar gehalten ist,
wobei ein jeweiliger Bowdenzug eine Bowdenzug-Hülle und eine Seele umfasst, und ein jeweiliger Bowdenzug einen der Sperrbolzen mit dem Griffstück koppelt, wobei die Griffstückhülse direkt oder indirekt wenigstens zwei griffstückseitige Widerlager für ein jeweiliges hinteres Anschlagende einer jeweiligen Bowdenzug-Hülle ausbildet,
und wobei die wenigstens zwei Seelen der Bowdenzüge am Griffstück zugfest befestigt sind,
und wobei wenigstens zwei Drehanschläge vorhanden sind, die eine Drehung des Griffstücks gegenüber der Griffstückhülse auf einen Drehwinkelbereich DWB begrenzen, mit DWB<360°.

Die Erfindung schlägt vor, mit einem einzigen Griffstück, welchen in seiner zugehörigen Griffstückhülse axial verschiebbar gehalten und geführt ist, mehrere Arretierbolzen-Anordnungen über Bowdenzüge gleichzeitig parallel zu betätigen. Dafür ist es vorgesehen, die Seelen aller zu betätigenden Bowdenzüge zugfest an demselben Griffstück zu befestigen, und die Bowdenzug-Hüllen aller zu betätigender Bowdenzüge an derselben, zugehörigen Griffstückhülse abzustützen. Entsprechend wird bei einem Herausziehen des Griffstücks aus der Griffstückhülse bei allen Bowdenzügen die jeweilige Seele gegenüber der jeweiligen Bowdenzug-Hülle verschoben, und entsprechend werden alle Bowdenzüge betätigt. Der Aufbau des Arretierbolzensystems wird im Bereich von Griffstück und Griffstückhülse an die Betätigung mehrerer Arretierbolzen-Anordnungen mit erfindungsgemäßen, einfach umzusetzenden Maßnahmen angepasst, und die Zwischenschaltung eines aufwändig zu installierenden Seilzugverteilers ist nicht notwendig, und ebenso ist die Verwendung mehrerer Griffstücke nicht notwendig.

Wenn die wenigstens zwei Arretierbolzen-Anordnungen, die mit ihren Bowdenzügen an das Griffstück gekoppelt sind, gemeinsam mit ihren Arretierbolzen zwei Bauteile gegen eine gegenseitige Verschiebung sichern, kann über das Griffstück diese Sicherung auf einfache Weise insgesamt aufgehoben und wieder eingerichtet werden. Der Werker braucht nur ein einziges Griffstück herauszuziehen, und hat sogar noch eine Hand für weitere Tätigkeiten frei (etwa zur Manipulation an einem der gesicherten Bauteile).

In der eingezogenen Stellung des Griffstücks ragen die Sperrbolzen mit einer vorderen Bolzenspitze aus der Bolzenhülse heraus (ausgefahrene Position des Sperrbolzens), und in der herausgezogenen Stellung des Griffstücks sind die Sperrbolzen typischerweise in die Bolzenhülsen zurückgezogen (eingefahrene Position des Sperrbolzens). Meist sind die Sperrbolzen mittels Federkraft in die ausgefahrene Position vorgespannt, und damit auch das Griffstück in die eingezogene Stellung.

Das Griffstück kann als T-Griff ausgebildet sein oder einen Hauptteil oder Handhabungsteil umfassen, der als T-Griff ausgebildet ist. Es sind aber auch viele andere Griffstück-Typen eisetzbar, beispielsweise Sterngriffe, Pilzgriffe oder konische Griffe.

Die Griffstückhülse weist typischerweise ein Außengewinde auf, bevorzugt in ihrem vorderen Bereich, zum Einschrauben in eine Struktur (z.B. einen Maschinenrahmen). Ebenso weist eine jeweilige Bolzenhülse typischerweise ein Außengewinde auf, bevorzugt in ihrem vorderen Bereich, zum Einschrauben in eine Struktur (z.B. einen Maschinenrahmen).

Die griffstückseitigen Widerlager für die Bowdenzug-Hüllen sind an der Griffstückhülse unmittelbar ausgebildet oder starr an die Griffstückhülse angebunden. Ebenso erfolgt die zugfeste Befestigung (bevorzugt starre Befestigung) der Seelen am Griffstück bevorzugt unmittelbar am Griffstück oder starr an das Griffstück angebunden.

Typischerweise ist der axiale Verfahrweg des Griffstücks gegenüber der Griffstückhülse durch wenigstens zwei axiale Anschläge begrenzt, und das Griffstück ist unverlierbar an der Griffstückhülse gelagert.

Erfindungsgemäß ist vorgesehen, dass wenigstens zwei Drehanschläge vorhanden sind, die eine Drehung des Griffstücks gegenüber der Griffstückhülse auf einen Drehwinkelbereich DWB begrenzen, mit DWB<360°. Die Begrenzung des Drehwinkelbereichs (Drehwinkelbegrenzung) vermeidet ein unkontrolliertes Verdrillen der Seelen, und vermeidet entsprechend ein Blockieren der Betätigung des Arretierbolzensystems. Die Drehanschläge können beispielsweise durch einen oder mehrere radiale Vorsprünge und Rücksprünge am Griffstück und an der Griffstückhülse eingerichtet sein.

### Bevorzugte Ausführungsformen der Erfindung

### Ausführungsformen zu Drehbarkeit und Verrastung des Griffstücks

Besonders bevorzugt ist eine Ausführungsform des erfindungsgemäßen Arretierbolzensystems, die vorsieht, dass DWB ≤180°, bevorzugt DWB ≤90°.

Vorteilhaft ist eine Ausführungsform, die vorsieht,
dass ein axialer Verfahrweg des Griffstücks gegenüber der Griffstückhülse durch axiale Anschläge begrenzt ist,
und dass das Griffstück an der Griffstückhülse über den gesamten axialen Verfahrweg drehfest geführt ist, entsprechend einem Drehwinkelbereich DWB von 0°. Diese Bauform ist besonders einfach, und kann (soweit es die Seite des Griffstücks betrifft) jegliche Verdrillung der Seelen und damit jegliche Funktionsbeeinträchtigung ausschließen. Diese Bauform kann insbesondere ohne einen Mechanismus zum selbsttätigen Halten oder Verrasten der herausgezogenen Stellung angewandt werden. Typischerweise sind an Griffstück und Griffstückhülse jeweils ein oder mehrere radiale Vorsprünge und axiale Nuten ausgebildet. Die axialen Endstellungen des Griffstücks entsprechen der eingezogenen Stellung und der herausgezogenen Stellung.

In einer bevorzugten Weiterbildung dieser Ausführungsform weisen in einem Bereich einer gegenseitigen Lagerung von Griffstück und Griffstückhülse das Griffstück und die Griffstückhülse nicht-kreisrunde Profile in einem Querschnitt senkrecht zur Griffstückachse auf, insbesondere hexagonale Profile. Durch einander entsprechende, nicht-kreisrunde Profile kann eine sehr robuste und exakte gegenseitige Führung ohne gegenseitige Drehbarkeit eingerichtet werden.

In einer ebenfalls bevorzugten Weiterbildung ist am Griffstück wenigstens ein radialer Vorsprung ausgebildet, der in wenigstens eine axiale Nut an der Griffstückhülse eingreift, oder umgekehrt. Eine solche Führung ist vergleichsweise einfach einzurichten, insbesondere auch bei geringen radialen Abmessungen.

In einer bevorzugten Ausführungsform ist für einen Wechsel zwischen der eingezogenen Stellung und der herausgezogenen Stellung das Griffstück gegenüber der Griffstückhülse über seinen Verfahrweg verdrehbar ausgebildet, entsprechend einem Drehwinkelbereich DWB > 0°. Durch die Verdrehbarkeit kann auf besonders einfache Weise ein Mechanismus eingerichtet werden, mit dem das Griffstück selbsttätig in der herausgezogenen Stellung gehalten werden kann, oder in der herausgezogenen Stellung verrastet werden kann.

Eine vorteilhafte Weiterbildung zu dieser Ausführungsform sieht vor, dass am Griffstück wenigstens ein radialer Vorsprung ausgebildet ist, der in der eingezogenen Stellung in wenigstens eine Nut, insbesondere axiale Nut, an der Griffstückhülse eingefahren ist, und der in der herausgezogenen Stellung auf einer Abstellfläche an der Griffstückhülse aufsitzt, oder umgekehrt,
insbesondere wobei in der herausgezogenen Stellung der radiale Vorsprung mittels Federkraft auf die Abstellfläche gedrückt wird. Dieser Aufbau ermöglicht auf einfache und robuste Weise ein selbsttätiges Halten des Griffstücks in der herausgezogenen Stellung. Bevorzugt sind jeweils zwei einander gegenüberliegende radiale Vorsprünge und Nuten vorgesehen.

Dabei kann vorgesehen sein, dass die Abstellfläche eine ebenen, senkrecht zur Griffstückachse verlaufenden, teilringförmigen Abschnitt umfasst. Dies ist einfach zu fertigen, und durch Reibung tritt in der Regel eine ausreichende Fixierung der Drehstellung ein, insbesondere durch Federkraft unterstützt.

Alternativ kann auch vorgesehen sein, dass die Abstellfläche einen eine axiale Vertiefung ausbildenden Abschnitt umfasst. Dadurch ist auf einfache Weise eine Verrastung einrichtbar. Die herausgezogene Stellung kann dann nur verlassen werden, wenn der radiale Vorsprung aus der axialen Vertiefung ausgehoben wird, typischerweise gegen Federkraft.

In einer bevorzugten Weiterbildung ist vorgesehen, dass für einen Wechsel zwischen der eingezogenen Stellung und der herausgezogenen Stellung das Griffstück gegenüber der Griffstückhülse ausgehend von der herausgezogenen Stellung von der eingezogenen Stellung weg axial hinter die herausgezogene Stellung zurückziehbar ist. Dadurch kann eine einfache, in der Praxis bewährte Bedienung eingerichtet werden, insbesondere auch mit Rastfunktion. Es kann auf einfache Weise eine Verrastung in der herausgezogenen Stellung aufgehoben werden, oder auch Reibungswiderstand beim Wechsel der Stellung des Griffstücks vermieden oder minimiert werden. Die hinter die heraufgezogene Stellung zurückgezogene Stellung wird auch als Zwischenstellung bezeichnet.

Besonders bevorzugt ist eine Ausführungsform, bei der ein Mechanismus vorgesehen ist, mit dem das Griffstück in der herausgezogenen Stellung selbsttätig gehalten werden kann,
insbesondere wobei mit dem Mechanismus das Griffstück in der herausgezogenen Stellung verrastbar ist. Dadurch ist der Werker nach Überführung des Griffstücks in die herausgezogene Stellung frei für andere Tätigkeiten, etwa für Manipulationen an den zuvor gesicherten Bauteilen.

### Ausführungsformen betreffend die zugfeste Befestigung der Seelen

Besonders bevorzugt ist eine Ausführungsform, die vorsieht,
dass das Griffstück wenigstens einen Durchführungsraum aufweist, durch welchen wenigstens eine der Seelen geführt ist,
dass das Griffstück wenigstens eine Klemm-Gewindebohrung aufweist, die von außen zu dem wenigstens einen Durchführungsraum führt,
und dass in der wenigstens einen Klemm-Gewindebohrung wenigstens eine Klemmschraube angeordnet ist, die die wenigstens eine Seele, die in dem wenigstens einen Durchführungsraum verläuft, im Griffstück verklemmt. Die Verklemmung der Seelen im Durchführungsraum mittels der Klemmschraube ist besonders einfach, und ermöglicht eine axial vergleichsweise kurze Bauform des Griffstücks. Insbesondere wird kein Schraubnippel benötigt, der an einem Ende der Seele aufgeklemmt wird und dann einen Kopplungsanschlag am Griffstück hintergreift. Ein Zugang ins Innere des Griffstücks über einen abnehmbaren, hinteren Deckel (etwa für die Montage eines Schraubnippels) ist nicht nötig. Die Gewindebohrung kann beispielsweise seitlich am Griffstück angebracht werden. Falls gewünscht, kann für jede Seele ein eigener Durchführungsraum, eine eigene Gewindebohrung zum jeweiligen Durchführungsraum und eine eigene Klemmschraube für eine jeweilige Gewindebohrung vorgesehen sein, es können aber auch mittels einer Klemmschraube auch leicht mehrere Seelen gemeinsam im Griffstück verklemmt werden (siehe unten). Die Klemmgewindebohrung verläuft typischerweise in radialer Richtung (bezogen auf die Griffstück-Achse). Die Klemmschraube drückt die Seele oder die Seelen gegen eine Wand des Durchführungsraums, typischerweise unter plastischer Verformung der Seele oder Seelen.

Besonders bevorzugt ist eine Weiterbildung dieser Ausführungsform, die vorsieht,
dass das Griffstück einen gemeinsamen Durchführungsraum aufweist, in welchem die Seelen aller Bowdenzüge als Bündel verlaufen,
dass das Griffstück eine gemeinsame Klemm-Gewindebohrung aufweist, die von außen zu dem gemeinsamen Durchführungsraum führt,
und dass in der gemeinsamen Klemm-Gewindebohrung eine gemeinsame Klemmschraube angeordnet ist, die Seelen des Bündels gemeinsam im Griffstück verklemmt. Dies ist baulich einfach einzurichten, und ermöglicht zudem eine besonders schnelle Montage.

In einer vorteilhaften Ausführungsform ist vorgesehen,
dass das Griffstück einen End-Innenraum und wenigstens einen Durchführungsraum aufweist, der von einer vorderseitigen Öffnung des Griffstücks zum End-Innenraum führt,
dass durch den wenigstens einen Durchführungsraum wenigstens eine der Seelen geführt ist,
und dass wenigstens ein Schraubnippel an wenigstens einer der Seelen befestigt ist, wobei der Schraubnippel in dem End-Innenraum angeordnet ist und das Griffstück hintergreift. Diese Bauform kommt ohne Klemm-Gewindebohrung im Griffstück aus, was oft einen besonders robusten Aufbau des Griffstücks ermöglicht. Manchen Werkern fällt bei dieser Bauform auch die Montage des Arretierbolzensystems leichter. Falls gewünscht, kann für jede Seele ein eigener Durchführungsraum und ein eigener Schraubnippel vorgesehen sein, es können aber auch mittels eines Schraubnippels leicht mehrere Seelen gemeinsam im Griffstück befestigt werden (siehe unten). Der End-Innenraum und der oder die Durchführungsräume werden gemeinsam auch als Innenraum des Griffstücks bezeichnet.

Bei einer bevorzugten Weiterbildung dieser Ausführungsform ist vorgesehen, dass das Griffstück einen gemeinsamen Durchführungsraum aufweist, durch welchen die Seelen aller Bowdenzüge als Bündel verlaufen,
und dass ein gemeinsamer Schraubnippel vorhanden ist, der an dem Bündel der Seelen befestigt ist. Dies vereinfacht den Aufbau weiter, und ermöglicht eine schnellere Montage.

Bevorzugt ist auch eine Ausführungsform, bei der das Griffstück eine axiale Bohrung aufweist, in welche wenigstens eine der Seelen eingeschoben ist, bevorzugt wobei die Seelen aller Bowdenzüge in der axialen Bohrung als Bündel verlaufen. Dies vereinfacht den Aufbau. Die axiale Bohrung dient typischerweise als gemeinsamer Durchführungsraum (siehe oben). Wenn alle Seelen in einer gemeinsamen, zentralen axialen Bohrung verlaufen, werden beim Betätigen des Griffstücks mit großer Zuverlässigkeit alle Seelen in der Regel in gleicher Weise (mit gleicher Amplitude) gegenüber ihren Bowdenzug-Hüllen verschoben.

### Ausführungsformen zur Aufteilung des Griffstücks

Bevorzugt ist weiterhin eine Ausführungsform, die vorsieht,
dass das Griffstück einen Axialteil und einen Hauptteil umfasst, wobei der Axialteil in der Griffstückhülse verfahrbar ist,
wobei der Axialteil mit einem hinteren Endbereich durch die Griffstückhülse hindurch ragt,
und wobei der Hauptteil am Axialteil am hinteren Endbereich des Axialteils befestigt ist, insbesondere aufgeschraubt ist. Dies vereinfacht die Montage von Griffstück und Griffstückhülse. Der Axialteil kann in die Griffstückhülse von einem vorderen Ende her eingeschoben werden, bis ein hinteres Ende des Axialteils hinten aus der Griffstückhülse herausragt (typischerweise wobei ein gegenseitiger Anschlag den Verfahrweg des Axialteils in Richtung auf die herausgezogene Stellung zu begrenzt), und das übrige Griffstück, also der Hauptteil, kann dann an diesem herausragenden, hinteren Ende des Axialteils befestigt werden. Das Griffstück kann im Hauptteil dann problemlos radial weiter ausgebildet sein als das hintere Ende des Axialteils.

Vorteilhaft ist eine Weiterbildung dieser Ausführungsform, wobei wenigstens eine Klemm-Gewindebohrung durch den Hauptteil und durch den Axialteil hindurch verläuft. In der (wenigstens einen) Klemmgewindebohrung ist (jeweils) eine Klemmschraube angeordnet, mit der wenigstens eine der Seelen im Griffstück verklemmt wird (siehe oben). Durch diese Bauform ist für die Klemmschraube eine besonders große Wandstärke verfügbar, und die Klemmschraube wird besonders sicher gehalten.

Bevorzugt ist auch eine Weiterbildung, bei der der Hauptteil einen Stutzenteil und einen Handhabungsteil aufweist, die einzeln am Axialteil befestigt sind, insbesondere aufgeschraubt sind, wobei der Stutzenteil weiter vorne am Axialteil befestigt ist als der Handhabungsteil,
insbesondere wobei wenigstens eine Klemm-Gewindebohrung durch den Stutzenteil verläuft. Mit dieser Bauform ist eine vereinfachte Montage möglich. Typischerweise schließt der Handhabungsteil einen End-Innenraum des Griffstücks ab, insbesondere zum hinteren Ende hin. Mit dieser Bauform ist es möglich, zunächst den Stutzenteil am Axialteil zu montieren und mit diesen Bauteilen zunächst die zugfeste Befestigung der Seelen einzurichten (beispielsweise durch Verklemmen der Seelen mit einer Klemmschraube, die durch den Stutzenteil und den Axialteil verläuft, einschließlich etwaiger Längenkürzungen der Seelen am hinteren Ende), und dann mit dem Handhabungsteil das Griffstück zu vervollständigen. Zudem ist es einfacher möglich, das Griffstück durch verschiedene Typen von Handhabungsteilen zu variieren (T-Griffe, Pilzgriffe, Sterngriffe usw.), wobei über das Stutzenteil eingerichtete Funktionen (etwa eine Verklemmung der Seelen, oder auch eine Haltefunktion oder Rastfunktion für die herausgezogene Stellung) nicht verändert oder beeinträchtigt werden.

Bevorzugt ist auch eine Ausführungsform, bei der ein Innenraum des Griffstücks lediglich von einem vorderen Ende des Griffstücks, von dem aus die wenigstens eine Seele eingeführt ist, zugänglich ist. Dies vereinfacht den Aufbau des Griffstücks, insbesondere des Hauptteils oder des Handhabungsteils. Über die erfindungsgemäße Konstruktion, insbesondere über die vorgeschlagene Verklemmung der Seelen mittels Klemmschrauben oder die Aufteilung des Hauptteils auf ein Stutzenteil und ein Handhabungsteil, kann eine geschlossene Ausbildung, insbesondere ohne (hinteren) abnehmbare Deckel, leicht eingerichtet werden. Die Montage ist besonders unkompliziert. Der Innenraum umfasst einen End-Innenraum und wenigstens einen Durchführungsraum, der vom vorderen Ende des Griffstücks zum End-Innenraum führt.

### Ausführungsformen für die griffstückseitigen Widerlager

Bei einer vorteilhaften Ausführungsform ist vorgesehen,
dass an einer vorderen Öffnung der Griffstückhülse ein Lagerbauteil angeordnet ist, welches die vordere Öffnung der Griffstückhülse zumindest teilweise überdeckt,
und dass das Lagerbauteil wenigstens zwei nebeneinander liegende, griffstückseitige Widerlager ausbildet, wobei jedes griffstückseitige Widerlager eine Ausnehmung zur Aufnahme eines hinteren Anschlagendes einer Bowdenzug-Hülle und eine Durchbruchöffnung an einem Boden des Lagerbauteils zur Durchführung der zugehörigen Seele aufweist. Mit dem Lagerbauteil können auf einfache Weise die griffstückseitigen Widerlager für die mehreren Bowdenzüge eingerichtet werden. Das Lagerbauteil kann an der vorderen Öffnung montiert werden, nachdem ein Axialteil des Griffstücks durch die vordere Öffnung in die Griffstückhülse eingeschoben wurde. Das Lagerbauteil kann den Axialteil dann auch in Richtung auf die eingezogene Stellung zu axial in der Griffstückhülse sichern. Das Lagerbauteil ist typischerweise durch Verschrauben oder durch Verpressen an der übrigen Griffstückhülse starr befestigt.

Besonders bevorzugt ist eine Weiterbildung dieser Ausführungsform, bei der das Lagerbauteil als ein Lagereinsatz ausgebildet ist, der in die vordere Öffnung der Griffstückhülse eingesetzt ist, bevorzugt eingeschraubt oder eingepresst ist. Dies ermöglicht einen besonders kompakten Aufbau, und kann den Axialteil auf einfache Weise in der Griffstückhülse nach vorne hin sichern.

### Ausführungsformen betreffend die jeweiligen Arretierbolzen-Anordnungen

Bevorzugt ist weiterhin eine Ausführungsform, die vorsieht,
dass in einer jeweiligen Arretierbolzen-Anordnung der Sperrbolzen mittels Federkraft in eine ausgefahrene Position vorgespannt ist, in der der Sperrbolzen mit einer vorderen Bolzenspitze aus der Bolzenhülse herausragt, und der Sperrbolzen gegen die Federkraft in eine eingefahrene Position zurückziehbar ist,
wobei die Seele des zugehörigen Bowdenzugs von einem hinteren Ende der Bolzenhülse durch die Bolzenhülse zu einem hinteren Ende des Sperrbolzens geführt ist, und wobei ein an der Seele befestigter, vorderer Kopplungskörper am Sperrbolzen eingehakt ist,
wobei am Sperrbolzen, insbesondere in einem axial hinteren Bereich, ein radial nach außen gerichteter Vorsprung ausgebildet ist, und an der Bolzenhülse, insbesondere in einem axial vorderen Bereich, ein radial nach innen gerichteter Rücksprung ausgebildet ist, wobei der Vorsprung den Rücksprung radial hintergreift und dadurch die axiale Verfahrbarkeit des Sperrbolzens in der Bolzenhülse in Richtung auf die ausgefahrene Position zu begrenzt,
wobei die Bolzenhülse an ihrem hinteren Ende eine Gewindebohrung aufweist, in die ein Gewindeeinsatz eingeschraubt ist, wobei der Gewindeeinsatz direkt oder indirekt die axiale Verfahrbarkeit des Sperrbolzens in der Bolzenhülse in Richtung auf die eingefahrene Position zu begrenzt,
wobei die Seele auch durch den Gewindeeinsatz geführt ist,
und wobei der Gewindeeinsatz direkt oder indirekt ein sperrbolzenseitiges Widerlager für ein vorderes Anschlagende der Bowdenzug-Hülle des zugehörigen Bowdenzugs ausbildet.

Dieser Aufbau der Arretierbolzen-Anordnungen erleichtert die Montage und spätere Handhabung der Arretierbolzen-Anordnungen. Mit dem erfindungsgemäßen Aufbau ist sichergestellt, dass der Arretierbolzen sicher in der Bolzenhülse gehalten werden kann (und der Arretierbolzen nicht zur vorderen Öffnung der Bolzenhülse hin aus der Bolzenhülse herausfällt), insbesondere auch, wenn am Bowdenzug keine Spannung anliegt. In Richtung auf die ausgefahrene Position zu wird der Sperrbolzen durch den radial nach außen gerichteten Vorsprung des Sperrbolzens und den radial nach innen gerichteten Rücksprung gegen ein Herausgleiten aus der Bolzenhülse gesichert. In Richtung auf die eingefahrene Position zu wird der Sperrbolzen durch den Gewindeeinsatz gesichert.

Bei der Montage kann der Sperrbolzen bei noch nicht installiertem Gewindeeinsatz vom hinteren Ende her durch die Gewindebohrung in die Bolzenhülse eingeführt werden, wobei bereits der vordere Kopplungsabschnitt am Sperrbolzen eingehakt ist und typischerweise auch eine Druckfeder die Seele des Bowdenzugs umgreift. Dafür ist ein kleinster Innenradius der Gewindebohrung und des sich anschließender Teils des Innenraums der Bolzenhülse (bis zum radialen Rücksprung) größer als ein größter Außenradius des Sperrbolzens. Bei eingeführtem Sperrbolzen kann dann der Gewindeeinsatz in die Gewindebohrung eingeschraubt werden. Der eingeschraubte Gewindeeinsatz hintergreift den Sperrbolzen (und typischerweise auch zumindest indirekt die Druckfeder) und sichert dann den Sperrbolzen in der Bolzenhülse.

Der Gewindeeinsatz wird auch (direkt oder indirekt) zur Ausbildung eines sperrbolzenseitigen Widerlagers für die Bowdenzughülle verwendet, wodurch ein axial kompakter und einfacher Aufbau, insbesondere mit vergleichsweise wenig Bauteilen, ermöglicht wird.

Bevorzugt ist eine Weiterbildung dieser Ausführungsform, die vorsieht, dass zur Bereitstellung der Federkraft in einem Innenraum der Bolzenhülse axial zwischen dem Sperrbolzen und dem Gewindeeinsatz eine Druckfeder angeordnet ist, insbesondere wobei sich die Druckfeder am hinteren Ende des Sperrbolzens und am vorderen Ende des Gewindeeinsatzes unmittelbar abstützt,
und insbesondere wobei die Druckfeder als eine Schraubenfeder ausgebildet ist, und dass die Seele auch durch die Druckfeder hindurchgeführt ist. Mit der Druckfeder kann auf einfache Weise der Arretierbolzen in die ausgefahrene Position vorgespannt werden. Die Führung der Seele durch die Druckfeder hindurch ermöglicht einen kompakten Aufbau.

Vorteilhaft ist eine Weiterbildung dieser Ausführungsform, die vorsieht, dass der Gewindeeinsatz ein Innengewinde aufweist, in das an einem hinteren Ende des Gewindeeinsatzes ein Schaftabschnitt einer Widerlagerschraube zumindest teilweise eingeschraubt ist,
dass die Widerlagerschraube an ihrem hinteren Ende einen Becher aufweist, der das sperrbolzenseitige Widerlager für das vordere Anschlagende der Bowdenzug-Hülse ausbildet,
und dass die Seele auch durch eine axiale Bohrung der Widerlagerschraube hindurchgeführt ist. Mit der Widerlagerschraube kann der Bowdenzug verspannt werden, bzw. der Abstand von Sperrbolzen und bolzenseitigem Widerlager relativ zur Länge der über das vordere Anschlagende der Bowdenzug-Hülle hinausragenden Seele eingestellt werden. Die Widerlagerschraube wird auch als Stellschraube oder Becherschraube bezeichnet. Mit dem Becher der Widerlagerschraube wird eine indirekte Ausbildung des sperrbolzenseitigen Widerlagers am Gewindeeinsatz eingerichtet. Alternativ kann auch am Gewindeeinsatz am hinteren Ende eine Ausnehmung vorgesehen sein, die das sperrbolzenseitige Widerlager direkt ausbildet.

Bei einer bevorzugten Weiterentwicklung dieser Weiterbildung ist auf dem Schaftabschnitt eine Kontermutter aufgeschraubt, die gegen das hintere Ende des Gewindeeinsatzes oder gegen das hintere Ende der Bolzenhülse verspannt ist. Mit der Kontermutter kann die Einschraubtiefe der Widerlagerschraube fixiert werden.

Bevorzugt ist zudem eine Weiterbildung, bei der am vorderen Anschlagende der Bowdenzug-Hülse eine Endkappe angeordnet ist. Die Endkappe deckt das vordere Anschlagende der Bowdenzughülle ab und schützt es dadurch, zum Beispiel vor Abnutzung durch Reibung. Durch geeignete Wahl der Endkappe kann über die Dicke des Endkappengrunds (also die dortige Dicke der Endkappe in axialer Richtung) auch die relative axiale Position der Bowdenzug-Hülle zum Sperrbolzen mit eingestellt werden.

Vorteilhaft ist auch eine Weiterbildung, die vorsieht,
dass der Sperrbolzen im Bereich der vorderen Bolzenspitze, die in der ausgefahrenen Position aus der Bolzenhülse herausragt, geschlossen ausgebildet ist,
und dass der Sperrbolzen zum Einhaken des vorderen Kopplungskörpers eine seitlich offene Aussparung ausbildet,
insbesondere wobei die Aussparung zweiseitig offen ausgebildet ist,
und insbesondere wobei die Aussparung im Wesentlichen quer zur Bolzenachse verläuft. Durch den geschlossenen Aufbau der Bolzenspitze ist diese besonders robust, und von dieser Seite kann kein Schmutz in den Sperrbolzen eindringen. Über die seitlich offene Aussparung kann das Einhaken des vorderen Kopplungskörpers leicht erfolgen; in der montierten Position kann die Innenwand der Bolzenhülse die seitlichen Öffnungen dieser Aussparung abdecken und dadurch den vorderen Kopplungskörper sichern. Eine zweiseitig offene Ausbildung erleichtert die Montage. Wenn die Aussparung senkrecht zur Bolzenachse verläuft, ist die Fertigung der Aussparung besonders einfach.

Vorteilhaft ist auch eine Weiterbildung, bei der die Bolzenhülse in ihrem vorderen Bereich ein Bolzenhülsen-Außengewinde ausbildet. Mit dem Außengewinde kann die Bolzenhülse in eine Struktur, etwa einen Maschinenrahmen, eingeschraubt und an der Struktur befestigt werden.

Weitere Vorteile der Erfindung ergeben sich aus der Beschreibung und der Zeichnung. Ebenso können die vorstehend genannten und die noch weiter ausgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

### Detaillierte Beschreibung der Erfindung und Zeichnung

- Fig. 1: zeigt in einem schematischen Längsschnitt eine beispielhafte Ausführungsform eines erfindungsgemäßen Arretierbolzensystems, mit zwei Arretierbolzen-Anordnungen, die mit zwei Bowdenzügen an ein gemeinsames Griffstück gekoppelt sind;
- Fig. 2: zeigt in einem schematischen Längsschnitt eine beispielhafte Bauform einer Arretierbolzen-Anordnung für ein erfindungsgemäßes Arretierbolzensystem, mit dem Sperrbolzen in der ausgefahrenen Position;
- Fig. 3: zeigt die Arretierbolzen-Anordnung von Fig. 2, mit dem Sperrbolzen in der eingefahrenen Position;
- Fig. 4: zeigt die Arretierbolzen-Anordnung von Fig. 2, mit dem Sperrbolzen in der ausgefahrenen Position, in einer schematischen Perspektivansicht;
- Fig. 5: zeigt die Arretierbolzen-Anordnung von Fig. 4, mit dem Sperrbolzen in der eingefahrenen Position;
- Fig. 6: zeigt in einem schematischen Längsschnitt eine beispielhafte, erste Bauform des hinteren Teilbereichs (im Bereich von Griffstück und Griffstückhülse) eines erfindungsgemäßen Arretierbolzensystems, ohne Rastfunktion, mit dem Griffstück in der eingezogenen Stellung;
- Fig. 7: zeigt den hinteren Teilbereich von Fig. 6, mit dem Griffstück in der herausgezogenen Stellung;
- Fig. 8: zeigt den hinteren Teilbereich von Fig. 6, mit dem Griffstück in der eingezogenen Stellung, in einer schematischen Perspektivansicht;
- Fig. 9: zeigt den hinteren Teilbereich von Fig. 8, mit dem Griffstück in der herausgezogenen Stellung;
- Fig. 10: zeigt in einem schematischen Längsschnitt eine beispielhafte, zweite Bauform des hinteren Teilbereichs (im Bereich von Griffstück und Griffstückhülse) eines erfindungsgemäßen Arretierbolzensystems, mit Rastfunktion, mit dem Griffstück in der eingezogenen Stellung;
- Fig. 11: zeigt den hinteren Teilbereich von Fig. 10, mit dem Griffstück in der herausgezogenen Stellung;
- Fig. 12: zeigt den hinteren Teilbereich von Fig. 10, mit dem Griffstück in der eingezogenen Stellung, in einer schematischen Perspektivansicht;
- Fig. 13: zeigt den hinteren Teilbereich von Fig. 12, mit dem Griffstück in einer Zwischenstellung;
- Fig. 14: zeigt den hinteren Teilbereich von Fig. 12, mit dem Griffstück in der herausgezogenen Stellung, in Verrastung.

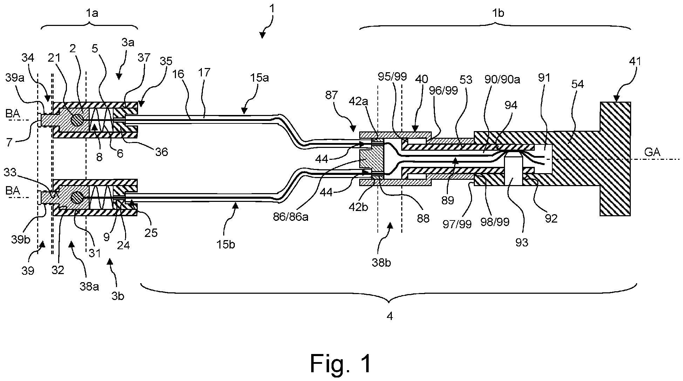

Die **Fig. 1** zeigt in schematischem Längsschnitt eine beispielhafte Ausführungsform eines erfindungsgemäßen Arretierbolzensystems 1. In der gezeigten Ausführungsform umfasst das Arretierbolzensystem 1 in einem vorderen Teilbereich 1a zwei Arretierbolzen-Anordnungen 3a, 3b, und in einem hinteren Teilbereich eine Griffstückhülse 40 und ein Griffstück 41, das in der Griffstückhülse 40 entlang einer Griffstückachse GA axial verfahrbar ist. Die Arretierbolzen-Anordnungen 3a, 3b sind über Bowdenzüge 15a, 15b mit dem Griffstück 41 und der Griffstückhülse 40 gekoppelt, und über das Griffstück 41 gemeinsam betätigbar. Die Gesamtheit der Bowdenzüge 15a, 15b, der Griffstückhülse 40 und des Griffstück 41 wird auch als Betätigungsanordnung 4 bezeichnet.

Eine jeweilige Arretierbolzen-Anordnung 3a, 3b umfasst eine Bolzenhülse 5, in der ein Sperrbolzen 2 entlang einer Bolzenachse BA axial verfahrbar ist. Der Sperrbolzen 2 verfügt über eine vordere Bolzenspitze 7, die in der gezeigten, ausgefahrenen Position gegenüber der Bolzenhülse 5 hervorsteht. Der Sperrbolzen 2 hat in seinem vorderen Teil (in Fig. 1 links) einen geringeren Durchmesser als in seinem hinteren Teil (in Fig. 1 rechts), und bildet somit durch seinen hinteren Teil einen radial nach außen gerichteten Vorsprung 31 aus. Der Übergang von vorderem Teil und hinterem Teil bildet eine Schulter 32 aus. Umgekehrt hat die Bolzenhülse 5 im Bereich ihres vorderen Endes 34 einen radial nach innen gerichteten Rücksprung 33, der radial enger ist als der Vorsprung 31. Entsprechend hintergreift der Vorsprung 31 des Sperrbolzens 2 den Rücksprung 33 mit der Schulter 32, so dass der Sperrbolzen 2 nicht nach vorne (in Fig. 1 nach links) aus der Bolzenhülse 5 herausfallen kann.

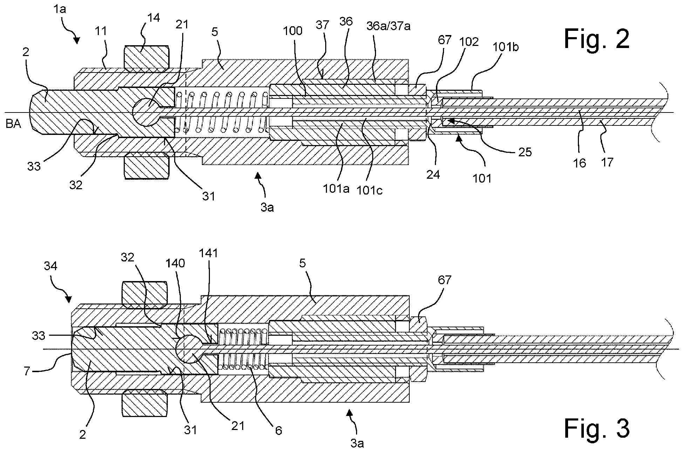

Im Bereich des hinteren Endes 35 der Bolzenhülse 5 ist ein Gewindeeinsatz 36 in eine Gewindebohrung 37 der Bolzenhülse 5 eingeschraubt. Die Bolzenhülse 5 bildet dazu ein Innengewinde aus, und der Gewindeeinsatz 36 ein passendes Außengewinde (siehe Fig. 2). In einem Innenraum 8 der Bolzenhülse 5 ist eine Druckfeder 6 angeordnet, die sich hier am hinteren Ende des Sperrbolzens 2 und am vorderen Ende des Gewindeeinsatzes 36 abstützt. Durch die Druckfeder 6 wird der Sperrbolzen 2 in die gezeigte, ausgefahrene Position vorgespannt. Der Gewindeeinsatz 36 verhindert zudem, dass der Sperrbolzen 2 oder auch die Druckfeder 6 nach hinten hin aus der Bolzenhülse 5 herausfallen können.

Am Sperrbolzen 2 ist zugfest der vordere Kopplungskörper 21 des zugehörigen Bowdenzugs 15a, 15b eingehängt. Der vordere Kopplungskörper 21 ist an einer Seele 16 des Bowdenzugs 15a, 15b befestigt. Die Seele 16 führt axial durch die Druckfeder 6 und eine Seelenbohrung 9 im Gewindeeinsatz 36 hindurch. Eine Bowdenzug-Hülle 17 des Bowdenzugs 15a, 15b ist mit einem vorderen Anschlagende 25 in einem sperrbolzenseitigen Widerlager 24 abgestützt. Das sperrbolzenseitige Widerlager 24 ist hier als eine Ausnehmung direkt im Gewindeeinsatz 36 ausgebildet.

Zur Montage der Arretierbolzen-Anordnungen 3a, 3b wird jeweils eine Seele 16 durch die Seelenbohrung 9 eines Gewindeeinsatzes 36 und durch eine Druckfeder 6 geführt, und dann wird der vordere Kopplungskörper 21 befestigt. Falls der vordere Kopplungskörper 21 durch die Seelenbohrung 9 und die Druckfeder 6 hindurch passt, kann der vordere Kopplungskörper 21 auch an der Seele 16 vormontiert sein. Sodann wird der vordere Kopplungskörper 21 in einen Sperrbolzen 2 eingehängt. Daraufhin werden der Sperrbolzen 2 und die Druckfeder 6 in den Innenraum 8 vom hinteren Ende 35 her durch die Gewindebohrung 37 in die Bolzenhülse 5 eingeführt, und anschließend wird der Gewindeeinsatz 36 in der Gewindebohrung 37 verschraubt. Der Sperrbolzen 2 ist dann unverlierbar in der Bolzenhülse 5 gehalten, auch wenn der Bowdenzug 15a, 15b ohne Spannung sein sollte.

Die Bolzenhülse 5 ist hier in einem Maschinenrahmen 38a befestigt, beispielsweise eingeschraubt (zur Vereinfachung sind Spannmuttern/Kontermuttern hier weggelassen). Vor dem Maschinenrahmen 38a ist ein quer zu den Bolzenachsen BA verschiebbares Bauteil 39 angeordnet, in welchem Verriegelungsausnehmungen 39a, 39b ausgebildet sind. Die vordere Bolzenspitze 7 ragt in der ausgefahrenen Position des Sperrbolzens 2 in die Verriegelungsausnehmungen 39a, 39b des verschiebbaren Bauteils 39 ein, so dass dieses blockiert ist. Durch Betätigen der Arretierbolzen-Anordnungen 3a, 3b über die Bowdenzüge 15a, 15b können die Sperrbolzen 2 in eine eingefahrene Position (nicht dargestellt, vgl. aber z.B. Fig. 3) verbracht werden, das heißt die vorderen Bolzenspitzen 7 werden auf die Bolzenhülse 5 (in Fig. 1 nach rechts) zu gezogen, bevorzugt wobei die Sperrbolzen 2 vollständig hinter das vordere Ende 34 der Bolzenhülse 5 zurückgezogen werden. In der zurückgezogenen Position greifen die vorderen Bolzenspitzen 7 nicht mehr in die Verriegelungsausnehmungen 39a, 39b ein, und das verschiebbare Bauteil 39 ist nicht mehr blockiert, und kann quer zu den Bolzenachsen BA gegenüber dem Maschinenrahmen 38a verschoben werden.

Zum Betätigen der Bolzenzüge 15a, 15b wird jeweils die Seele 16 relativ zur Bowdenzug-Hülse 17 in den Bolzenhülsen 5 vom vorderen Ende 34 weg (also in Fig. 1 nach rechts) gezogen. Die Bowdenzug-Hülse 17 weist hierfür eine ausreichende Eigensteifigkeit auf. Die Betätigung der beiden Bowdenzüge 15a, 15b erfolgt gemeinsam über den hinteren Teilbereich 1b mit dem gemeinsamen Griffstück 41, das in der gemeinsamen Griffstückhülse 40 verfahrbar ist.

Das Griffstück 41 umfasst einen Axialteil 53 und einen Hauptteil 54, das hier in Form eines T-Griffs ausgebildet ist. Der Hauptteil 54 ist hier zudem einteilig und nur nach vorne (zum Axialteil 53 hin) offen ausgebildet. Der Axialteil 53 ist mit seinem vorderen (in Fig. 1 linken) Ende verschiebbar in der Griffstückhülse 40 gelagert, und mit seinem hinteren Ende am Hauptteil 54 befestigt.

In der Griffstückhülse 53 ist ein Lagerbauteil 86 angeordnet. Das Lagerbauteil 86 ist hier als ein Lagereinsatz 86a ausgebildet und ist hier in eine vordere Öffnung 87 der Griffstückhülse 40 eingepresst. Das Lagerbauteil 86 bildet hier zwei radial nebeneinander liegende, griffstückseitige Widerlager 42a, 42b aus, die als Ausnehmungen im Lagerbauteil 86 ausgebildet sind. Die Bowdenzug-Hüllen 17 liegen mit hinteren, griffstückseitigen Anschlagenden 44 im jeweiligen griffstückseitigen Widerlager 42a, 42b an, die jeweils durch nach vorne offene Ausnehmungen im Lagerbauteil 86 ausgebildet sind. Im Boden des Lagerbauteils 86 sind Durchbruchöffnungen 88 ausgebildet, durch die die Seelen 16 hindurchgeführt sind. Die Seelen 16 verlaufen dann als Bündel in einem Innenraum 89 des Griffstück 41, der durch einen Durchführungsraum 90 und einen Endinnenraum 91 gebildet wird. Die Seelen 16 durchragen den Durchführungsraum 90, der hier als axiale Bohrung 90a ausgebildet ist, und führen hier bis in den End-Innenraum 91.

Im Griffstück 41 ist eine Klemm-Gewindebohrung 92 ausgebildet, die hier radialdurch einen vorderen Teil des Hauptteils 54 und einen hinteren Teil des Axialteils 53 verlauft. Die Seelen 16 werden durch eine Klemmschraube 93, die in die Klemm-Gewindebohrung 92 eingeschraubt ist, gegen eine Innenwand 94 des Axialteils 53 gedrückt und dadurch verklemmt. Die Klemmschraube 93 verklemmt dadurch alle Seelen 16 zugleich, und die Seelen 16 sind damit zugfest im Griffstück 41 befestigt.

Der Axialteil 53 verfügt hier über einen Kragen 95, der eine Schulter 96 der Griffstückhülse 40 hintergreift, wodurch der Axialteil 53 nicht nach hinten hin (in Fig. 1 nach rechts) aus der Griffstückhülse 40 herausfallen kann. Zudem kann der Axialteil 53 aufgrund des eingepressten Lagerbauteils 86 auch nicht nach vorne hin (in Fig. 1 nach links) aus der Griffstückhülse 40 herausfallen. Mit montiertem Hauptteil 54 ist der axiale Verfahrweg des Griffstücks 41 nach vorne hin (in Fig. 1 nach links) zudem durch die Vorderkante 97 des Hauptteils 54 des Griffstücks 41 und die Hinterkante 98 der Griffstückhülse 40 begrenzt; in der gezeigten eingezogenen Stellung des Griffstücks 41 sind die Vorderkante 97 und die Hinterkante 98 aneinander liegend. Somit bilden der Kragen 95 zusammen mit der Schulter 96 sowie die Vorderkante 97 zusammen mit der Hinterkante 98 axiale Anschläge 99 für einen begrenzten, axialen Verfahrbereich für das Griffstück 41 aus, und das Griffstück 41 ist unverlierbar in der Griffstückhülse 40 gehalten.

Für eine Montage des hinteren Teils 1b werden zunächst die Seelen 16 durch die Durchbruchöffnungen 88 im Lagerbauteil 86 und durch den Axialteil 53 geführt. Sodann wird der Axialteil 53 in die Griffstückhülse 40 vom vorderen Ende 87 her eingeschoben. Sodann wird auf dem hinteren Ende des Axialteils 53 der Hauptteil 54 angebracht und die Klemmschraube 93 eingedreht, um die Seelen 16 zu verklemmen. Nach dem Einführen des Axialteils 53 in die Griffstückhülse 40 wird zudem das Lagerbauteil 86 eingepresst.

Die Griffstückhülse 40 wird hier in einer weiteren Maschinenstruktur 38b befestigt, zum Beispiel eingeschraubt (zur Vereinfachung sind wiederum Spannmuttern/Kontermuttern weggelassen). Zum Betätigen der Bowdenzüge 15a, 15b wird das Griffstück 41 mit dem Hauptteil 54 ergriffen und von der Griffstückhülse 40 weg (in Fig. 1 nach rechts) herausgezogen, wodurch die Seelen 16 gegenüber den Bowdenzug-Hüllen 17 zum Griffstück 41 hin verschoben werden. Das Herausziehen des Griffstücks 41 erfolgt gegen die Kraft der Druckfedern 6 der Arretierbolzen-Anordnungen 3a, 3b.

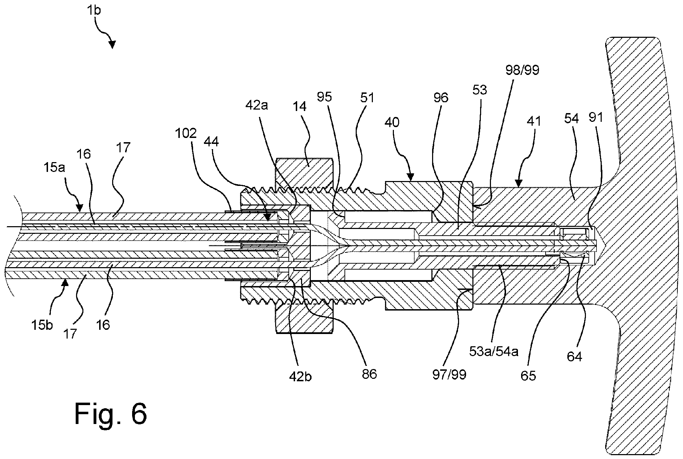

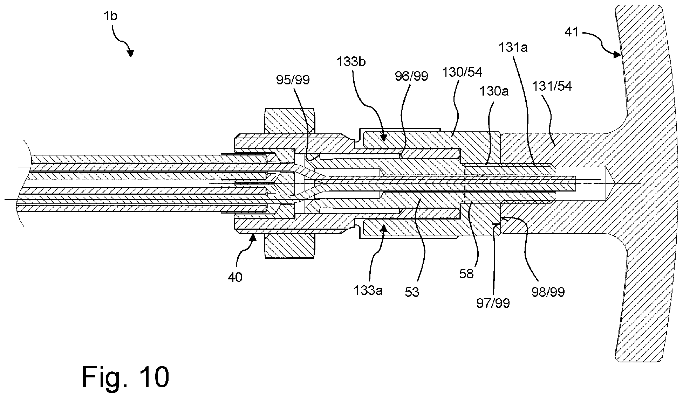

Man beachte, dass erfindungsgemäß eine Drehung des Griffstücks 41 gegenüber der Griffstückhülse 40 auf einen Drehwinkelbereich DWB<360° begrenzt ist (in Fig. 1 nicht näher dargestellt, vgl. aber die Figuren 6-9 für eine Ausführungsform mit DWB=0°, und die Figuren 10-14 für eine Ausführungsform mit DWB=90°).

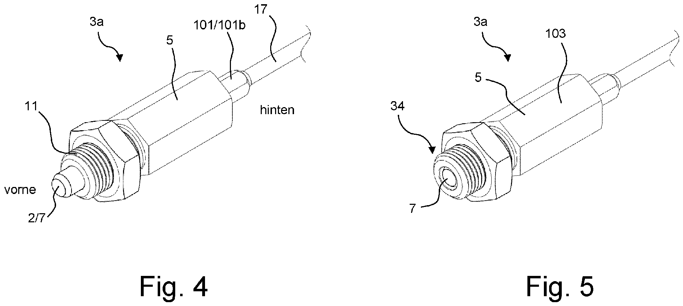

In den **Figuren 2 bis 5** wird eine beispielhafte Bauform einer Arretierbolzen-Anordnung 3a bzw. eines vorderen Teilbereichs 1a eines erfindungsgemäßen Arretierbolzensystems ausführlicher beschrieben. Die Figuren 2 und 3 zeigen jeweils Längsschnitte, und die Figuren 4 und 5 zeigen Perspektivdarstellungen. Die Figuren 2 und 4 zeigen die eingefahrene Position, und die Figuren 3 und 5 die ausgefahrene Position des Sperrbolzens 2. Es werden nur die wesentlichen Unterschiede zu den Arretierbolzen-Anordnungen von Fig. 1 erläutert.

Wie in Fig. 2 ersichtlich, ist in der ausgefahrenen Position der Sperrbolzen 2 mit seinem radialen Vorsprung 31 mit der Schulter 32 am radialen Rücksprung 33 der Bolzenhülse 5 im Anschlag.

Im vorderen Teil der Bolzenhülse 5 ist ein Bolzenhülsen-Außengewinde 11 zum Einschrauben in eine Struktur, etwa den in Fig. 1 gezeigten Maschinenrahmen, ausgebildet; in Fig. 2 ist beispielhaft eine Schraubmutter 14 aufgeschraubt.

In der Gewindebohrung 37 in das Innengewinde 37a der Bolzenhülse 5 ist der Gewindeeinsatz 36 mit seinem Außengewinde 36a eingeschraubt. Der Gewindeeinsatz 36 verfügt hier zudem über eine durchgehende Axialbohrung mit einem Innengewinde 100, in das der außengewindetragende Schaftabschnitt 101a einer Widerlagerschraube 101 eingeschraubt ist. Die Widerlagerschraube 101 verfügt an ihrem hinteren Ende über einen Becher 101b, welcher hier das sperrbolzenseitige Widerlager 24 ausbildet. Die Seele 16 führt durch eine axiale Bohrung 101c der Widerlagerschraube 101 hindurch; der Becher 101b hat für die Seele 16 einen Durchbruch zur axialen Bohrung 101c. Das vordere Anschlagende 25 der Bowdenzug-Hülle 25 ist hier in eine Endkappe 102 eingefügt, die im sperrbolzenseitigen Widerlager 24 im Becher 101b aufliegt. Auf den Schaftabschnitt 101a der Widerlagerschraube 101 ist zudem eine Kontermutter 67 aufgeschraubt, die gegen die Bolzenhülse 5 verspannt ist und dadurch die Einschraubposition der Widerlagerschraube 101 in der Gewindebohrung 37 sichert. Über die axiale Einschraubtiefe der Widerlagerschraube 101 in der Gewindebohrung 37 kann die Relativposition des vorderen Kopplungskörpers 21 relativ zum sperrbolzenseitigen Widerlager 24 bzw. zum vorderen Anschlagende 25 der Bowdenzug-Hülle 17 justiert bzw. gespannt werden.

In der Fig. 3, die die eingefahrene Position des Sperrbolzens 2 zeigt, ist ersichtlich, dass die vordere Bolzenspitze 7 bis auf die Höhe des vorderen Endes 34 der Bolzenhülse 5 in die Bolzenhülse 5 zurückziehbar ist. Die Druckfeder 6 fährt dabei näherungsweise "auf Block". Die vordere Bolzenspitze 7 ist geschlossen ausgebildet, insbesondere ohne einen Deckel. Am Sperrbolzen 2 ist eine seitlich offene Aussparung 140 ausgebildet, hier eine zweiseitig seitlich offene Aussparung 140 (offen nach über der Zeichenebene und nach unter die Zeichenebene in Fig. 3), um den vorderen Kopplungskörper 21 einzuhaken. Die Aussparung 140 verläuft radial (hier senkrecht zur Zeichenebene). Zudem ist ein Schlitz 141 im Sperrbolzen 2 für die Seele 16 vorgesehen, der durchgehend ist (also ebenfalls zweiseitig offen ist).

Wie aus den Figuren 4 und 5 ersichtlich ist, weist die Bolzenhülse 5 in ihrem hinteren Bereich an der Außenseite ein hexagonales Profil auf, so dass diese Außenseite als Schlüsselfläche 103 dienen kann. Auch der Becher 101b ist im Außenquerschnitt hexagonal ausgebildet, für einen einfachen Ansatz eines Schraubenschlüssels.

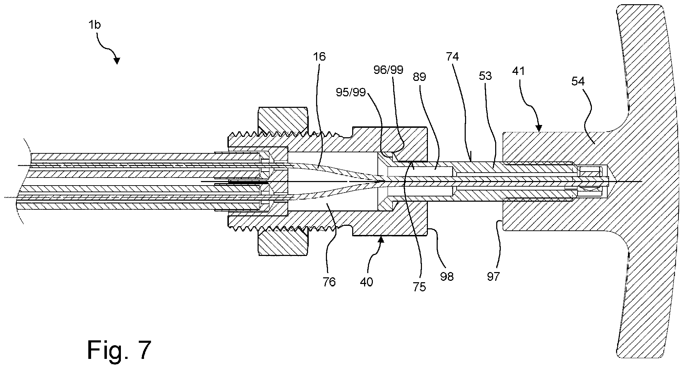

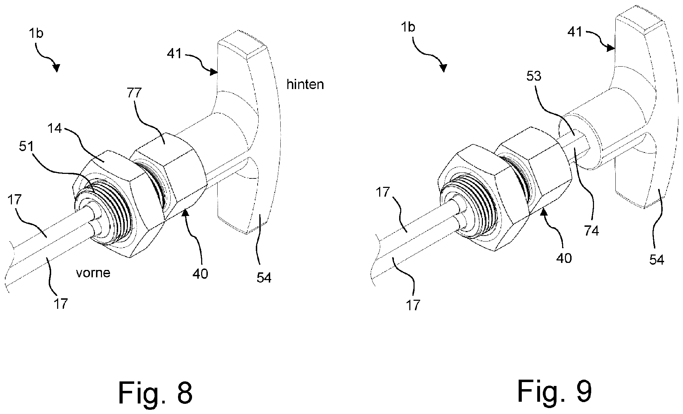

Die **Figuren 6 bis 9** zeigen eine beispielhafte erste Bauform des hinteren Teilbereichs 1b eines erfindungsgemäßen Arretierbolzensystems. Die Figuren 6 und 7 zeigen jeweils Längsschnitte, und die Figuren 8 und 9 zeigen Perspektivdarstellungen. Die Figuren 6 und 8 zeigen die eingezogene Stellung, und die Figuren 7 und 9 die ausgezogene Stellung des Griffstücks 41. Es werden nur die wesentlichen Unterschiede zu dem hinteren Teilbereich von Fig. 1 erläutert.

An der Außenseite der Griffstückhülse 40 ist in einem vorderen Teil ein Griffstückhülsen-Außengewinde 51 ausgebildet, um die Griffstückhülse 40 an dem Maschinenrahmen zu befestigen. Beispielhaft ist auch hier eine Mutter 14 aufgeschraubt.

Die beiden Seelen 16 der Bowdenzüge 15a, 15b verlaufen als Bündel im Axialteil 53 des Griffstücks 41 durch den Durchführungsraum 90 bis in den End-Innenraum 91 im Hauptteil 54. Dort ist auf den Seelen 16 ein gemeinsamer Schraubnippel 64 befestigt, der als hinterer (griffstückseitiger) Kopplungskörper für die Seelen 16 wirkt und einen Kopplungsanschlag 65 am hinteren Ende des Axialteils 53 hintergreift. Dadurch sind die Seelen 16 im Griffstück 41 zugfest befestigt.

Der Hauptteil 54 ist hier mit einem vorderen Teil auf einen hinteren Teil des Axialteils 53 aufgeschraubt. Der Axialteil 53 weist dafür ein Außengewinde 53a, und der Hauptteil 54 ein Innengewinde 54a auf.

Die griffstückseitigen Anschlagenden 44 der Bowdenzug-Hülsen 17 sind in Endkappen 102 eingesteckt, die wiederum an den griffstückseitigen Widerlagern 42a, 42b im Lagerbauteil 86 anliegen.

In der eingezogenen Stellung des Griffstücks 41, wie in Fig. 6 gezeigt, sind der Kragen 95 des Axialteils 53 und die Schulter 96 der Griffstückhülse 40 voneinander axial beabstandet. Hingegen liegen die Vorderkante 97 des Hauptteils 54 und die Hinterkante 98 der Griffstückhülse 40 aneinander an, so dass die Vorderkante 97 und die Hinterkante 98 als axiale Anschläge 99 wirken.

In der herausgezogenen Stellung des Griffstücks 41, wie in Fig. 7 gezeigt, liegt der Kragen 95 des Axialteils 53 an der Schulter 96 der Griffstückhülse 40 an, und der Kragen 95 und die Schulter 96 wirken als axiale Anschläge 99. Hingegen sind die Vorderkante 97 des Hauptteils 54 und die Hinterkante 98 der Griffstückhülse 40 voneinander abgehoben.

Wie in Fig. 9 gut zu erkennen ist, ist der Axialteil 53 in seinem vorderen Teil, der in der Griffstückhülse 40 geführt wird, mit einem nicht-rotationssymmetrischen Außenprofil 74 (Außenquerschnitt) ausgebildet, hier hexagonal. Ebenso ist ein Innenprofil 75 der Griffstückhülse 40 im Bereich der Lagerung des Axialteils 53 nicht-rotationssymmetrisch, hier wiederum hexagonal (in den Figuren nicht direkt erkennbar). Dadurch ist sichergestellt, dass sich das Griffstück 41 und die Griffstückhülse 40 insbesondere bei der Betätigung nicht gegeneinander verdrehen können (Drehwinkelbereich 0°), und die Seelen 16 sich im Innenraum 89 des Griffstücks 41 und im Innenraum 76 der Griffstückhülse 40 nicht verdrillen. In dieser Bauform wird das Griffstück 41 in der herausgezogenen Stellung nicht selbsttätig gehalten, sondern muss von einem Werker (gegen die Kraft der Druckfedern der Arretierbolzen-Anordnungen) so lange wie gewünscht mit der Hand festgehalten werden.

An der Außenseite der Griffstückhülse 40 ist zudem noch eine Schlüsselfläche 77, hier mit hexagonalem Profil, ausgebildet, die beim Befestigen der Griffstückhülse 40 an einem Maschinenrahmen genutzt werden kann.

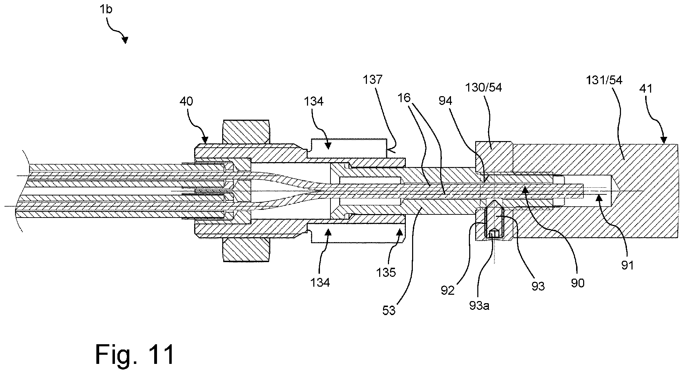

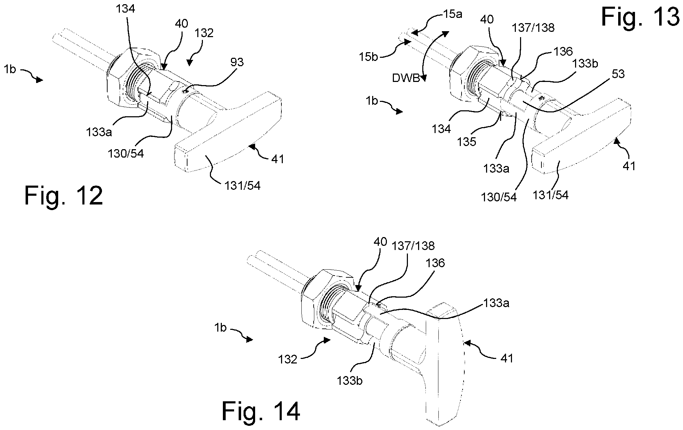

Die **Figuren 10 bis 14** zeigen eine beispielhafte zweite Bauform des hinteren Teilbereichs 1b eines erfindungsgemäßen Arretierbolzensystems. Die Figuren 10 und 11 zeigen jeweils Längsschnitte, und die Figuren 12, 13 und 14 zeigen Perspektivdarstellungen. Die Figuren 10 und 12 zeigen die eingezogene Stellung, und die Figuren 11 und 14 die ausgezogene Stellung, und die Fig. 13 eine maximal nach hinten gezogene Zwischenstellung des Griffstücks 41. Es werden nur die wesentlichen Unterschiede zu dem hinteren Teilbereich von Fig. 1 erläutert.

Bei der gezeigten Bauform ist, wie in Fig. 10 und Fig. 11 besonders gut ersichtlich, der Hauptteil 54 des Griffstücks 41 zweiteilig ausgebildet. Der Hauptteil 54 umfasst hier ein Stutzenteil 130 und einen Handhabungsteil 131, die jeweils einzeln am Axialteil 53 befestigt sind. Das Handhabungsteil 131 ist hier in Form eines T-Griffs ausgebildet. In der gezeigten Bauform sind der Stutzenteil 130 mit einem Stutzenteil-Innengewinde 130a und der Handhabungsteil 131 mit einem Handhabungsteil-Innengewinde 131a auf einem Axialteil-Außengewinde 58 in einem hinteren Endbereich des Axialteils 53 aufgeschraubt.

Im Stutzenteil 130 und im Axialteil 53 verläuft die Klemm-Gewindebohrung 92, in welcher die Klemmschraube 93 eingeschraubt ist (vgl. Fig. 11). Die Klemmschraube 93 ist hier zur Vereinfachung in einer Einschraubstellung gezeigt, in der die Seelen 16 noch nicht verklemmt sind; zum Verklemmen der Seelen 16 wird die Klemmschraube 93 noch tiefer in die Klemm-Gewindebohrung 92 eingeschraubt, bis die Seelen 16 zwischen der Klemmschraube 93 und der gegenüberliegenden Innenwand 94 des Axialteils 53 (im Bereich des Durchführungsraums 90) verklemmt sind. An der Hinterseite der Klemmschraube 93 ist dafür ein Innenmehrkant 93a (hier ein Innensechskant für einen Inbusschlüssel) ausgebildet. Die Seelen 16 ragen hier mit ihren hinteren Enden bis in den End-Innenraum 91 hinein.

Typischerweise werden bei der Montage zunächst die Seelen 16 durch den Durchführungsraum 90 des Axialteils 53 gesteckt und das Stutzenteil 130 wird auf den Axialteil 53 aufgeschraubt. Dann werden die Seelen 16 mittels der Klemmschraube 93 fixiert. Nun können die hinteren Enden der Seelen 16 eingekürzt werden, so dass sie in den End-Innenraum 91 passen werden, und sodann kann der Handhabungsteil 131 auf den Axialteil 53 aufgeschraubt werden.

Die in den Figuren 10 bis 14 gezeigte Bauform verfügt zudem über einen Mechanismus 132, mit dem die herausgezogene Stellung des Griffstücks 41 selbsttätig gehalten werden kann, und hier auch verrastet werden kann, wie vor allem in den Figuren 12 bis 14 gut ersichtlich ist.

Am Griffstück 41, hier am Stutzenteil 130 des Hauptteils 54, sind in der gezeigten Bauform an einander gegenüberliegenden Seiten zwei radiale Vorsprünge 133a, 133b ausgebildet. Diese verlaufen hier als sich nach vorne (zur Griffstückhülse 40) hin erstreckende, axiale Fortsätze hier am im Übrigen ringförmigen Stutzenteil 130. In der eingezogenen Stellung (Fig. 12) sind diese radialen Vorsprünge 133a, 133b in Nuten 134 an der Griffstückhülse 40 eingefahren. Die Nuten 134 verlaufen hier als axiale Nuten. Man beachte, dass in den Figuren 12-14 eine der Nuten 134, nämlich die Nut für den Vorsprung 133b, verdeckt ist. Solange die Vorsprünge 133a, 133b zumindest ein Stück weit in die Nuten 134 eingefahren sind, kann das Griffstück 41 gegenüber der Griffstückhülse 40 nur axial verfahren werden, nicht aber gedreht werden.

An der Griffstückhülse 40 sind einander gegenüberliegende Abstellflächen 137 ausgebildet, die hier für eine Verrastung als axiale Vertiefungen 138 eingerichtet sind. Man beachte, dass in den Figuren 12-14 eine der Abstellflächen 137, nämlich die Abstellfläche für den Vorsprung 133b, verdeckt ist.

Um das Griffstück 41 in die herausgezogene Stellung zu verbringen, wird zunächst ausgehend von der eingezogenen Stellung von Fig. 12 das Griffstück 41 nach hinten in die in Fig. 13 gezeigte Zwischenstellung verbracht. Das Griffstück 41 ist nun maximal aus der Griffstückhülse 40 herausgezogen (so wie es der Kragen 95 und die Schulter 96 als axiale Anschläge 99 zulassen, vgl. Fig. 10), gegen die Federkraft der über die Bowdenzüge 15a, 15b gekoppelten Kraft der Druckfedern in den Arretierbolzen-Anordnungen. Von dieser Stellung von Fig. 13 ausgehend kann das Griffstück 41 gegenüber der (in der Regel drehfesten) Griffstückhülse 40 in einem Drehwinkelbereich DWB von hier 90° verdreht werden. Man beachte, dass dafür den Axialteil 53 und die Griffstückhülse 41 in einem Lagerbereich runde Profile aufweisen.

Ausgehend von der Drehposition von Fig. 13 kann das Griffstück 41 im Uhrzeigersinn um 90° gedreht werden, bis der Vorsprung 133a an seiner rechten Seite den Drehanschlag 136 an der Griffstückhülse 40 erreicht. Ausgehend von der Drehposition von Fig. 13 kann zudem das Griffstück 41 gegen den Uhrzeigersinn gar nicht verdreht werden, da der Drehanschlag 135, der hier durch einen hinteren Teil der Nut 134 ausgebildet wird, diese Bewegung gegenüber dem vorderen Teil des radialen Vorsprungs 133a an dessen linker Seite blockiert.

Wenn das Griffstück 41 ausgehend von Fig. 13 um 90° im Uhrzeigersinn gegenüber der Griffstückhülse 40 verdreht worden ist, kann das Griffstück 41 losgelassen werden. Das Griffstück 41 gleitet dann in axialer Richtung mit den axial vorderen Enden der radialen Vorsprünge 133a, 133b in die axialen Vertiefungen 138 ein, und die axial vorderen Enden der radialen Vorsprünge 133a, 133b ruhen auf den Abstellflächen 137. Diese verrastete Stellung ist in Fig. 14 gezeigt. Die Federkraft drückt das Griffstück 41 bzw. die Vorsprünge 133a, 133b auf die Abstellflächen 137 der Griffstückhülse 40. Da die Abstellflächen 137 als axiale Vertiefungen 138 ausgebildet sind, kann das Griffstück 41 nunmehr nicht einfach zurückgedreht werden, vielmehr müsste dafür das Griffstück 41 zunächst wieder ein wenig axial zurückgezogen werden. Dadurch wird die in Fig. 14 gezeigte Stellung durch den Mechanismus 132 besonders sicher gehalten, insbesondre auch bei leichten Vibrationen oder leichten Erschütterungen.

### Bezuaszeichenliste

- 1: Arretierbolzensystem
- 1a: vorderer Teilbereich
- 1b: hinterer Teilbereich
- 2: Sperrbolzen
- 3a, 3b: Arretierbolzen-Anordnungen
- 4: Betätigungsanordnung
- 5: Bolzenhülse
- 6: Druckfeder
- 7: vordere Bolzenspitze
- 8: Innenraum (Bolzenhülse)
- 9: Seelenbohrung (Gewindeeinsatz)
- 11: Bolzenhülsen-Außengewinde
- 14: Mutter
- 15a, 15b: Bowdenzüge
- 16: Seele
- 17: Bowdenzug-Hülle
- 21: vorderer Kopplungskörper
- 24: sperrbolzenseitiges Widerlager
- 25: vorderes Anschlagende (Bowdenzug-Hülle)
- 31: radialer Vorsprung (Sperrbolzen)
- 32: Schulter (Sperrbolzen)
- 33: radialer Rücksprung (Bolzenhülse)
- 34: vorderes Ende (Bolzenhülse)
- 35: hinteres Ende (Bolzenhülse)
- 36: Gewindeeinsatz
- 36a: Außengewinde (Gewindeeinsatz)
- 37: Gewindebohrung
- 37a: Innengewinde (Gewindebohrung)
- 38a: Maschinenrahmen (für Bolzenhülse)
- 38b: Maschinenrahmen (für Griffstückhülse)
- 39: verschiebbares Bauteil
- 39a, 39b: Verriegelungsausnehmungen
- 40: Griffstückhülse
- 41: Griffstück
- 42a, 42b: griffstückseitige Widerlager
- 44: hinteres/griffstückseitiges Anschlagende (Bowdenzug-Hülle)
- 51: Griffstückhülsen-Außengewinde
- 53: Axialteil (Griffstück)
- 53a: Außengewinde (Axialteil)
- 54: Hauptteil (Griffstück)
- 54a: Innengewinde (Hauptteil)
- 58: Axialteil-Außengewinde
- 64: Schraubnippel/griffstückseitiger Kopplungskörper
- 65: Kopplungsanschlag
- 67: Kontermutter
- 74: nicht-rotationssymmetrisches Außenprofil (Axialteil im Lagerbereich)
- 75: nicht-rotationssymmetrisches Innenprofil (Griffstückhülse im Lagerbereich)
- 76: Innenraum (Griffstückhülse)
- 86: Lagerbauteil
- 86a: Lagereinsatz
- 87: vordere Öffnung (Griffstückhülse)
- 88: Durchbruchöffnungen (im Boden des Lagerbauteils)
- 89: Innenraum (Griffstück)
- 90: Durchführungsraum
- 90a: axiale Bohrung
- 91: End-Innenraum
- 92: (gemeinsame) Klemm-Gewindebohrung
- 93: (gemeinsame) Klemmschraube
- 93a: Innenmehrkant
- 94: Wand/Innenwand (Axialteil)
- 95: Kragen (Axialteil)
- 96: Schulter (Griffstückhülse)
- 97: Vorderkante (Griffstück)
- 98: Hinterkante (Griffstückhülse)
- 99: axiale Anschläge
- 100: Innengewinde (Gewindeeinsatz)
- 101: Widerlagerschraube
- 101a: Schaftabschnitt (Widerlagerschraube)
- 101b: Becher (Widerlagerschraube)
- 101c: axiale Bohrung (Widerlagerschraube)
- 102: Endkappe
- 103: Schlüsselfläche (Bolzenhülse)
- 130: Stutzenteil
- 130a: Stutzenteil-Innengewinde
- 131: Handhabungsteil
- 131a: Handhabungsteil-Innengewinde
- 132: Mechanismus
- 133a, 133b: radiale Vorsprünge
- 134: Nut
- 135: Drehanschlag
- 136: Drehanschlag
- 137: Abstellfläche
- 138: axiale Vertiefung
- 140: seitlich offene Aussparung
- 141: Schlitz
- BA: Bolzenachse
- DWB: Drehwinkelbereich
- GA: Griffstückachse

## Patentansprüche

1. Arretierbolzensystem (1), umfassend
- eine Arretierbolzen-Anordnung (3a, 3b), mit einem Sperrbolzen (2), der in einer Bolzenhülse (5) entlang einer Bolzenachse (BA) verfahrbar ist, und
- eine Betätigungsanordnung (4) mit einem Griffstück (41), einer Griffstückhülse (40) und einem Bowdenzug (15a, 15b),
wobei das Griffstück (41) in der Griffstückhülse (40) zwischen einer eingezogenen Stellung und einer herausgezogenen Stellung entlang einer Griffstückachse (GA) verfahrbar ist, und insbesondere unverlierbar gehalten ist,
wobei der Bowdenzug (15a, 15b) eine Bowdenzug-Hülle (17) und eine Seele (16) umfasst, und der Bowdenzug (15a, 15b) den Sperrbolzen (2) mit dem Griffstück (41) koppelt,
wobei die Griffstückhülse (40) direkt oder indirekt ein griffstückseitiges Widerlager (42a, 42b) für ein hinteres Anschlagende (44) der Bowdenzug-Hülle (17) ausbildet,
wobei die Seele (16) des Bowdenzugs (15a, 15b) am Griffstück (41) zugfest befestigt ist,
**dadurch gekennzeichnet,**
**dass** das Arretierbolzensystem (1) wenigstens zwei Arretierbolzen-Anordnungen (3a, 3b) umfasst, jeweils mit einem Sperrbolzen (2), der in einer Bolzenhülse (5) entlang einer Bolzenachse (BA) verfahrbar ist,
**dass** die Betätigungsanordnung (4) ausgebildet ist mit wenigstens zwei Bowdenzügen (15a, 15b),
wobei ein jeweiliger Bowdenzug (15a, 15b) eine Bowdenzug-Hülle (17) und eine Seele (16) umfasst, und ein jeweiliger Bowdenzug (15a, 15b) einen der Sperrbolzen (2) mit dem Griffstück (41) koppelt,
wobei die Griffstückhülse (40) direkt oder indirekt wenigstens zwei griffstückseitige Widerlager (42a, 42b) für ein jeweiliges hinteres Anschlagende (44) einer jeweiligen Bowdenzug-Hülle (17) ausbildet,
und wobei die wenigstens zwei Seelen (16) der Bowdenzüge (15a, 15b) am Griffstück (41) zugfest befestigt sind,
und **dass** wenigstens zwei Drehanschläge (135, 136) vorhanden sind, die eine Drehung des Griffstücks (41) gegenüber der Griffstückhülse (40) auf einen Drehwinkelbereich DWB begrenzen,
mit DWB<360°.

2. Arretierbolzensystem (1) nach Anspruch 1, **dadurch gekennzeichnet,**
**dass** DWB ≤180°,
bevorzugt DWB ≤90°.

3. Arretierbolzensystem (1) nach Anspruch 1 oder 2, **dadurch gekennzeichnet, dass** ein axialer Verfahrweg des Griffstücks (41) gegenüber der Griffstückhülse (40) durch axiale Anschläge (99) begrenzt ist,
und dass das Griffstück (41) an der Griffstückhülse (40) über den gesamten axialen Verfahrweg drehfest geführt ist, entsprechend einem Drehwinkelbereich DWB von 0°.

4. Arretierbolzensystem (1) nach Anspruch 3, **dadurch gekennzeichnet, dass** am Griffstück (41) wenigstens ein radialer Vorsprung (133a, 133b) ausgebildet ist, der in wenigstens eine axiale Nut (134) an der Griffstückhülse (40) eingreift, oder umgekehrt.

5. Arretierbolzensystem (1) nach Anspruch 1 oder 2, **dadurch gekennzeichnet, dass** für einen Wechsel zwischen der eingezogenen Stellung und der herausgezogenen Stellung das Griffstück (41) gegenüber der Griffstückhülse (40) über seinen Verfahrweg verdrehbar ausgebildet ist, entsprechend einem Drehwinkelbereich DWB > 0°.

6. Arretierbolzensystem (1) nach Anspruch 5, **dadurch gekennzeichnet, dass** am Griffstück (41) wenigstens ein radialer Vorsprung (133a, 133b) ausgebildet ist, der in der eingezogenen Stellung in wenigstens eine Nut (134), insbesondere axiale Nut (134), an der Griffstückhülse (40) eingefahren ist, und der in der herausgezogenen Stellung auf einer Abstellfläche (137) an der Griffstückhülse (40) aufsitzt, oder umgekehrt, insbesondere wobei in der herausgezogenen Stellung der radiale Vorsprung (133a, 133b) mittels Federkraft auf die Abstellfläche (137) gedrückt wird.

7. Arretierbolzensystem (1) nach einem der Ansprüche 5 oder 6, **dadurch gekennzeichnet, dass** für einen Wechsel zwischen der eingezogenen Stellung und der herausgezogenen Stellung das Griffstück (41) gegenüber der Griffstückhülse (40) ausgehend von der herausgezogenen Stellung von der eingezogenen Stellung weg axial hinter die herausgezogene Stellung zurückziehbar ist.

8. Arretierbolzensystem (1) nach einem der vorhergehenden Ansprüche, **dadurch gekennzeichnet, dass** ein Mechanismus (132) vorgesehen ist, mit dem das Griffstück (41) in der herausgezogenen Stellung selbsttätig gehalten werden kann,
insbesondere wobei mit dem Mechanismus (132) das Griffstück (41) in der herausgezogenen Stellung verrastbar ist.

9. Arretierbolzensytem (1) nach einem der Ansprüche 1 bis 8, **dadurch gekennzeichnet,**
**dass** das Griffstück (41) wenigstens einen Durchführungsraum (90) aufweist, durch welchen wenigstens eine der Seelen (16) geführt ist, dass das Griffstück (41) wenigstens eine Klemm-Gewindebohrung (92) aufweist, die von außen zu dem wenigstens einen Durchführungsraum (90) führt,
und **dass** in der wenigstens einen Klemm-Gewindebohrung (92) wenigstens eine Klemmschraube (93) angeordnet ist, die die wenigstens eine Seele (16), die in dem wenigstens einen Durchführungsraum (90) verläuft, im Griffstück (41) verklemmt,
insbesondere wobei das Griffstück (41) einen gemeinsamen Durchführungsraum (90) aufweist, in welchem die Seelen (16) aller Bowdenzüge (15a, 15b) als Bündel verlaufen, und das Griffstück (41) eine gemeinsame Klemm-Gewindebohrung (92) aufweist, die von außen zu dem gemeinsamen Durchführungsraum (90) führt, und in der gemeinsamen Klemm-Gewindebohrung (92) eine gemeinsame Klemmschraube (93) angeordnet ist, die Seelen (16) des Bündels gemeinsam im Griffstück (41) verklemmt.

10. Arretierbolzensystem (1) nach einem der Ansprüche 1 bis 8, **dadurch gekennzeichnet,**
**dass** das Griffstück (41) einen End-Innenraum (91) und wenigstens einen Durchführungsraum (90) aufweist, der von einer vorderseitigen Öffnung des Griffstücks (41) zum End-Innenraum (91) führt,
**dass** durch den wenigstens einen Durchführungsraum (90) wenigstens eine der Seelen (16) geführt ist,
und **dass** wenigstens ein Schraubnippel (64) an wenigstens einer der Seelen (16) befestigt ist, wobei der Schraubnippel (64) in dem End-Innenraum (91) angeordnet ist und das Griffstück (41) hintergreift, insbesondere wobei das Griffstück (41) einen gemeinsamen Durchführungsraum (90) aufweist, durch welchen die Seelen (16) aller Bowdenzüge (15a, 15b) als Bündel verlaufen, und ein gemeinsamer Schraubnippel (64) vorhanden ist, der an dem Bündel der Seelen (16) befestigt ist.

11. Arretierbolzensystem (1) nach einem der vorhergehenden Ansprüche, **dadurch gekennzeichnet,**
**dass** das Griffstück (41) einen Axialteil (53) und einen Hauptteil (54) umfasst, wobei der Axialteil (53) in der Griffstückhülse (40) verfahrbar ist, wobei der Axialteil (53) mit einem hinteren Endbereich durch die Griffstückhülse (40) hindurch ragt,
und wobei der Hauptteil (54) am Axialteil (53) am hinteren Endbereich des Axialteils (53) befestigt ist, insbesondere aufgeschraubt ist.

12. Arretierbolzensystem (1) nach Anspruch 11, **dadurch gekennzeichnet, dass** wenigstens eine Klemm-Gewindebohrung (92) durch den Hauptteil (54) und durch den Axialteil (53) hindurch verläuft.

13. Arretierbolzensystem (1) nach einem der Ansprüche 11 oder 12, **dadurch gekennzeichnet,**
**dass** der Hauptteil (54) einen Stutzenteil (130) und einen Handhabungsteil (131) aufweist, die einzeln am Axialteil (53) befestigt sind, insbesondere aufgeschraubt sind, wobei der Stutzenteil (130) weiter vorne am Axialteil (53) befestigt ist als der Handhabungsteil (131),
insbesondere wobei wenigstens eine Klemm-Gewindebohrung (92) durch den Stutzenteil (130) verläuft.

14. Arretierbolzensystem (1) nach einem der vorhergehenden Ansprüche,
**dadurch gekennzeichnet,**
**dass** ein Innenraum (89) des Griffstücks (41) lediglich von einem vorderen Ende des Griffstücks (41), von dem aus die wenigstens eine Seele (16) eingeführt ist, zugänglich ist.

15. Arretierbolzensystem (1) nach einem der vorhergehenden Ansprüche,
**dadurch gekennzeichnet,**
**dass** an einer vorderen Öffnung (87) der Griffstückhülse (40) ein Lagerbauteil (86) angeordnet ist, welches die vordere Öffnung (87) der Griffstückhülse (41) zumindest teilweise überdeckt,
und **dass** das Lagerbauteil (86) wenigstens zwei nebeneinander liegende, griffstückseitige Widerlager (42a, 42b) ausbildet, wobei jedes griffstückseitige Widerlager (42a, 42b) eine Ausnehmung zur Aufnahme eines hinteren Anschlagendes (44) einer Bowdenzug-Hülle (17) und eine Durchbruchöffnung (88) an einem Boden des Lagerbauteils (86) zur Durchführung der zugehörigen Seele (16) aufweist.

16. Arretierbolzensystem (1) nach Anspruch 15, **dadurch gekennzeichnet, dass** das Lagerbauteil (86) als ein Lagereinsatz (86a) ausgebildet ist, der in die vordere Öffnung (87) der Griffstückhülse (40) eingesetzt ist, bevorzugt eingeschraubt oder eingepresst ist.

17. Arretierbolzensystem (1) nach einem der vorhergehenden Ansprüche, **dadurch gekennzeichnet,**
**dass** in einer jeweiligen Arretierbolzen-Anordnung (3a, 3b) der Sperrbolzen (2) mittels Federkraft in eine ausgefahrene Position vorgespannt ist, in der der Sperrbolzen (2) mit einer vorderen Bolzenspitze (7) aus der Bolzenhülse (5) herausragt, und der Sperrbolzen (2) gegen die Federkraft in eine eingefahrene Position zurückziehbar ist,
wobei die Seele (16) des zugehörigen Bowdenzugs (15a, 15b) von einem hinteren Ende (35) der Bolzenhülse (5) durch die Bolzenhülse (5) zu einem hinteren Ende des Sperrbolzens (2) geführt ist, und wobei ein an der Seele (16) befestigter, vorderer Kopplungskörper (21) am Sperrbolzen (2) eingehakt ist,
wobei am Sperrbolzen (2), insbesondere in einem axial hinteren Bereich, ein radial nach außen gerichteter Vorsprung (31) ausgebildet ist, und an der Bolzenhülse (5), insbesondere in einem axial vorderen Bereich, ein radial nach innen gerichteter Rücksprung (33) ausgebildet ist, wobei der Vorsprung (31) den Rücksprung (33) radial hintergreift und dadurch die axiale Verfahrbarkeit des Sperrbolzens (2) in der Bolzenhülse (5) in Richtung auf die ausgefahrene Position zu begrenzt,
wobei die Bolzenhülse (5) an ihrem hinteren Ende eine Gewindebohrung (37) aufweist, in die ein Gewindeeinsatz (36) eingeschraubt ist, wobei der Gewindeeinsatz (36) direkt oder indirekt die axiale Verfahrbarkeit des Sperrbolzens (2) in der Bolzenhülse (5) in Richtung auf die eingefahrene Position zu begrenzt,
wobei die Seele (16) auch durch den Gewindeeinsatz (36) geführt ist, und wobei der Gewindeeinsatz (36) direkt oder indirekt ein sperrbolzenseitiges Widerlager (24) für ein vorderes Anschlagende (25) der Bowdenzug-Hülle (17) des zugehörigen Bowdenzugs (15a, 15b) ausbildet.

18. Arretierbolzensystem (1) nach Anspruch 17, **dadurch gekennzeichnet, dass** zur Bereitstellung der Federkraft in einem Innenraum (8) der Bolzenhülse (5) axial zwischen dem Sperrbolzen (2) und dem Gewindeeinsatz (36) eine Druckfeder (6) angeordnet ist, insbesondere wobei sich die Druckfeder (6) am hinteren Ende des Sperrbolzens (2) und am vorderen Ende des Gewindeeinsatzes (36) unmittelbar abstützt,
und insbesondere wobei die Druckfeder (6) als eine Schraubenfeder ausgebildet ist,
und dass die Seele (16) auch durch die Druckfeder (6) hindurchgeführt ist.

19. Arretierbolzensystem (1) nach Anspruch 17 oder 18, **dadurch gekennzeichnet, dass** der Gewindeeinsatz (36) ein Innengewinde (100) aufweist, in das an einem hinteren Ende des Gewindeeinsatzes (36) ein Schaftabschnitt (101a) einer Widerlagerschraube (101) zumindest teilweise eingeschraubt ist,
dass die Widerlagerschraube (101) an ihrem hinteren Ende einen Becher (101b) aufweist, der das sperrbolzenseitige Widerlager (24) für das vordere Anschlagende (25) der Bowdenzug-Hülse (17) ausbildet,
und dass die Seele (16) auch durch eine axiale Bohrung (101c) der Widerlagerschraube (101) hindurchgeführt ist.

20. Arretierbolzensystem (1) nach einem der Ansprüche 17 bis 19, **dadurch gekennzeichnet,**
**dass** der Sperrbolzen (2) im Bereich der vorderen Bolzenspitze (7), die in der ausgefahrenen Position aus der Bolzenhülse (5) herausragt, geschlossen ausgebildet ist,
und **dass** der Sperrbolzen (2) zum Einhaken des vorderen Kopplungskörpers (21) eine seitlich offene Aussparung (140) ausbildet, insbesondere wobei die Aussparung (140) zweiseitig offen ausgebildet ist, und insbesondere wobei die Aussparung (140) im Wesentlichen quer zur Bolzenachse (BA) verläuft.

## Claims

1. An indexing plunger system (1), comprising:
- an indexing plunger assembly (3a, 3b) having a locking pin (2) that can be moved in a pin sleeve (5) along a pin axis (BA), and
- an actuating assembly (4) having a handle (41), a handle sleeve (40) and a Bowden cable (15a, 15b),
wherein the handle (41) can be moved in the handle sleeve (40) between a retracted position and an extended position along a handle axis (GA), and in particular is held captively,
wherein the Bowden cable (15a, 15b) comprises a Bowden cable sheath (17) and a core (16), and the Bowden cable (15a, 15b) couples the locking pin (2) to the handle (41),
wherein the handle sleeve (40) directly or indirectly forms a handle-side abutment (42a, 42b) for a rear stop end (44) of the Bowden cable sheath (17),
wherein the core (16) of the Bowden cable (15a, 15b) is fastened to the handle (41) in a tension-resistant manner,
**characterized in that**
the indexing plunger system (1) comprises at least two indexing plunger assemblies (3a, 3b), each with a locking pin (2) that can be moved in a pin sleeve (5) along a pin axis (BA),
**in that** the actuating assembly (4) is designed with at least two Bowden cables (15a, 15b),
wherein a respective Bowden cable (15a, 15b) comprises a Bowden cable sheath (17) and a core (16), and a respective Bowden cable (15a, 15b) couples one of the locking pins (2) to the handle (41),
wherein the handle sleeve (40) directly or indirectly forms at least two handle-side abutments (42a, 42b) for a respective rear stop end (44) of a respective Bowden cable sleeve (17), and wherein the at least two cores (16) of the Bowden cables (15a, 15b) are fastened to the handle (41) in a tension-resistant manner,
and **in that** at least two rotation stops (135, 136) are provided that limit a rotation of the handle (41) relative to the handle sleeve (40) to a rotation angle range DWB, where DWB < 360°.

2. The indexing plunger system (1) according to claim 1,
**characterized in that**
DWB ≤ 180°, preferably DWB ≤ 90°.

3. The indexing plunger system (1) according to claim 1 or 2,
**characterized in that**
an axial travel path of the handle (41) relative to the handle sleeve (40) is limited by axial stops (99),
and **in that** the handle (41) is guided on the handle sleeve (40) in a rotationally fixed manner over the entire axial travel path, corresponding to a rotation angle range DWB of 0°.

4. The indexing plunger system (1) according to claim 3,
**characterized in that**
at least one radial projection (133a, 133b) is formed on the handle (41), which radial projection engages in at least one axial groove (134) on the handle sleeve (40), or vice versa.

5. The indexing plunger system (1) according to claim 1 or 2,
**characterized in that**
for changing between the retracted position and the extended position, the handle (41) is designed to be rotatable relative to the handle sleeve (40) over its travel path, corresponding to a rotation angle range DWB > 0°.

6. The indexing plunger system (1) according to claim 5,
**characterized in that**
at least one radial projection (133a, 133b) is formed on the handle (41), which, in the retracted position, is retracted into at least one groove (134), in particular an axial groove (134), on the handle sleeve (40), and which, in the extended position, rests on a support surface (137) on the handle sleeve (40), or vice versa,
in particular wherein, in the extended position, the radial projection (133a, 133b) is pressed onto the support surface (137) by means of spring force.

7. The indexing plunger system (1) according to any of claims 5 or 6, **characterized in that,** for changing between the retracted position and the extended position, the handle (41) can be retracted axially relative to the handle sleeve (40) starting from the extended position and away from the retracted position behind the extended position.

8. The indexing plunger system (1) according to any of the preceding claims, **characterized in that** a mechanism (132) is provided with which the handle (41) can be automatically held in the extended position,
in particular wherein the handle (41) can be locked in the extended position with the mechanism (132).

9. The indexing plunger system (1) according to any of claims 1 to 8,
**characterized in that**
the handle (41) has at least one passage space (90) through which at least one of the cores (16) is guided,
**in that** the handle (41) has at least one clamping threaded bore (92) that leads from the outside to the at least one passage space (90),
and **in that** at least one clamping screw (93) is arranged in the at least one clamping threaded bore (92), which clamping screw clamps the at least one core (16) that runs in the at least one passage space (90) in the handle (41),
in particular wherein the handle (41) has a common passage space (90) in which the cores (16) of all the Bowden cables (15a, 15b) run as a bundle, and the handle (41) has a common clamping threaded bore (92) that leads from the outside to the common passage space (90), and a common clamping screw (93) is arranged in the common clamping threaded bore (92), which common clamping screw clamps the cores (16) of the bundle together in the handle (41).

10. The indexing plunger system (1) according to any of claims 1 to 8,
**characterized in that**
the handle (41) has an end interior space (91) and at least one passage space (90) that leads from a front opening of the handle (41) to the end interior space (91),
**in that** at least one of the cores (16) is guided through the at least one passage space (90),
and **in that** at least one screw nipple (64) is fastened to at least one of the cores (16), wherein the screw nipple (64) is arranged in the end interior space (91) and engages behind the handle (41),
in particular wherein the handle (41) has a common passage space (90) through which the cores (16) of all the Bowden cables (15a, 15b) run as a bundle, and a common screw nipple (64) is provided that is fastened to the bundle of cores (16).

11. The indexing plunger system (1) according to any of the preceding claims,
**characterized in that**
the handle (41) comprises an axial part (53) and a main part (54), wherein the axial part (53) can be moved in the handle sleeve (40), wherein the axial part (53) projects with a rear end region through the handle sleeve (40),
and wherein the main part (54) is fastened, in particular screwed, to the axial part (53) at the rear end region of the axial part (53).

12. The indexing plunger system (1) according to claim 11, **characterized in that** at least one clamping threaded bore (92) extends through the main part (54) and through the axial part (53).

13. The indexing plunger system (1) according to any of claims 11 or 12,
**characterized in that**
the main part (54) has a nozzle part (130) and a handling part (131), which are individually fastened to the axial part (53), in particular screwed thereon, wherein the nozzle part (130) is fastened further forward on the axial part (53) than the handling part (131),
in particular wherein at least one clamping threaded bore (92) runs through the nozzle part (130).

14. The indexing plunger system (1) according to any of the preceding claims,
**characterized in that**
an interior space (89) of the handle (41) is only accessible from a front end of the handle (41), from which the at least one core (16) is inserted.

15. The indexing plunger system (1) according to any of the preceding claims,
**characterized in that**
a bearing component (86) is arranged at a front opening (87) of the handle sleeve (40), which bearing component at least partially covers the front opening (87) of the handle sleeve (41),
and **in that** the bearing component (86) forms at least two adjacent, handle-side abutments (42a, 42b), wherein each handle-side abutment (42a, 42b) has a recess for receiving a rear stop end (44) of a Bowden cable sheath (17) and a breakthrough opening (88) on a bottom of the bearing component (86) for the passage of the associated core (16).

16. The indexing plunger system (1) according to claim 15,
**characterized in that**
the bearing component (86) is designed as a bearing insert (86a) that is inserted into the front opening (87) of the handle sleeve (40), preferably screwed or pressed in.

17. The indexing plunger system (1) according to any of the preceding claims,
**characterized in that**
in a respective indexing plunger assembly (3a, 3b), the locking pin (2) is pretensioned by spring force into an extended posture in which the locking pin (2) protrudes from the pin sleeve (5) with a front pin tip (7), and the locking pin (2) can be retracted against the spring force into a retracted posture,
wherein the core (16) of the associated Bowden cable (15a, 15b) is guided from a rear end (35) of the pin sleeve (5) through the pin sleeve (5) to a rear end of the locking pin (2), and wherein a front coupling body (21) fastened to the core (16) is hooked onto the locking pin (2),
wherein a radially outwardly directed projection (31) is formed on the locking pin (2), in particular in an axially rear region, and a radially inwardly directed shoulder (33) is formed on the pin sleeve (5), in particular in an axially front region, wherein the projection (31) radially engages behind the shoulder (33) and thereby limits the axial mobility of the locking pin (2) in the pin sleeve (5) in the direction of the extended posture,
wherein the pin sleeve (5) has a threaded bore (37) at its rear end into which a threaded insert (36) is screwed, wherein the threaded insert (36) directly or indirectly limits the axial mobility of the locking pin (2) in the pin sleeve (5) in the direction of the retracted posture,
wherein the core (16) is also guided through the threaded insert (36), and wherein the threaded insert (36) directly or indirectly forms an abutment (24) on the locking pin side for a front stop end (25) of the Bowden cable sheath (17) of the associated Bowden cable (15a, 15b).

18. The indexing plunger system (1) according to claim 17,
**characterized in that**
to provide the spring force in an interior space (8) of the pin sleeve (5), a compression spring (6) is arranged axially between the locking pin (2) and the threaded insert (36),
in particular wherein the compression spring (6) is directly supported on the rear end of the locking pin (2) and on the front end of the threaded insert (36),
and in particular wherein the compression spring (6) is designed as a helical spring,
and **in that** the core (16) is also passed through the compression spring (6).

19. The indexing plunger system (1) according to claim 17 or 18, **characterized in that** the threaded insert (36) has an internal thread (100) into which a shaft portion (101a) of an abutment screw (101) is at least partially screwed at a rear end of the threaded insert (36),
**in that** the abutment screw (101) has a cup (101b) at its rear end, which cup forms the locking pin-side abutment (24) for the front stop end (25) of the Bowden cable sleeve (17),
and **in that** the core (16) is also guided through an axial bore (101c) of the abutment screw (101).

20. The indexing plunger system (1) according to any of claims 17 to 19,
**characterized in that**
the locking pin (2) is closed in the region of the front pin tip (7), which protrudes from the pin sleeve (5) in the extended posture,
and **in that** the locking pin (2) forms a laterally open recess (140) for hooking the front coupling body (21),
in particular wherein the recess (140) is open on two sides,
and in particular wherein the recess (140) runs substantially transversely to the pin axis (BA).

## Revendications

1. Système (1) à chevilles d'arrêt comprenant
- un ensemble (3a, 3b) de chevilles d'arrêt comportant une cheville de blocage (2) mobile, le long d'un axe (BA), dans une douille (5) logeant ladite cheville, et
- un ensemble d'actionnement (4) comportant une pièce de préhension (41), une douille (40) logeant ladite pièce, et une tringlerie Bowden (15a, 15b),
sachant que la pièce de préhension (41) est mobile le long d'un axe (GA), dans la douille (40) logeant ladite pièce, entre une position rétractée et une position déployée, et est notamment retenue de manière imperdable,
sachant que la tringlerie Bowden (15a, 15b) inclut une gaine de câblage (17) et une âme (16), et que ladite tringlerie Bowden (15a, 15b) couple la cheville de blocage (2) à la pièce de préhension (41),
la douille (40), logeant ladite pièce de préhension, donnant directement ou indirectement naissance à une contre-butée (42a, 42b) située côté pièce de préhension et affectée à une extrémité postérieure (44) de venue en butée de la gaine de câblage (17) de la tringlerie Bowden (15a, 15b),
l'âme (16) de ladite tringlerie Bowden (15a, 15b) étant fixée à ladite pièce de préhension (41) avec résistance à la traction,
**caractérisé par le fait**
**que** ledit système (1) à chevilles d'arrêt compte au moins deux ensembles (3a, 3b) de chevilles d'arrêt munis, à chaque fois, d'une cheville de blocage (2) mobile, le long d'un axe (BA), dans une douille (5) logeant ladite cheville ;
par le fait que l'ensemble d'actionnement (4) est conçu pour comporter au moins deux tringleries Bowden (15a, 15b),
sachant qu'une tringlerie Bowden (15a, 15b) respective inclut une gaine de câblage (17) et une âme (16), et qu'une tringlerie Bowden (15a, 15b) respective couple l'une des chevilles de blocage (2) à la pièce de préhension (41),
sachant que la douille (40) logeant ladite pièce de préhension donne, directement ou indirectement, naissance à au moins deux contre-butées (42a, 42b) situées côté pièce de préhension et affectées à une extrémité postérieure respective (44) de venue en butée d'une gaine de câblage (17) respective de tringlerie Bowden,
les deux âmes (16) des tringleries Bowden (15a, 15b), à présence minimale, étant alors fixées à ladite pièce de préhension (41) avec résistance à la traction ;
et par la présence d'au moins deux butées (135, 136) d'arrêt rotatoire qui cantonnent, à une plage DWB d'angles de rotation, une rotation de la pièce de préhension (41) par rapport à la douille (40) logeant ladite pièce,
auquel cas DWB < 360°.

2. Système (1) à chevilles d'arrêt, selon la revendication 1, **caractérisé par le fait**
**que** DWB ≤ 180°, DWB étant ≤ 90° de préférence.

3. Système (1) à chevilles d'arrêt, selon la revendication 1 ou 2, **caractérisé par le fait**
**qu'**une course de déplacement axial de la pièce de préhension (41), par rapport à la douille (40) logeant ladite pièce, est limitée par des butées axiales (99) ;
et par le fait que ladite pièce de préhension (41) est guidée avec verrouillage rotatif au niveau de ladite douille (40) logeant ladite pièce, sur l'intégralité de ladite course de déplacement axial, en correspondance avec une plage DWB d'angles de rotation de 0°.

4. Système (1) à chevilles d'arrêt, selon la revendication 3, **caractérisé par le fait**
**qu'**au moins une saillie radiale (133a, 133b), façonnée sur la pièce de préhension (41), pénètre dans au moins une rainure axiale (134) pratiquée au niveau de la douille (40) logeant ladite pièce, ou inversement.

5. Système (1) à chevilles d'arrêt, selon la revendication 1 ou 2, **caractérisé par le fait**
**qu'**en vue d'un changement opéré entre la position rétractée et la position déployée, la pièce de préhension (41) est conçue avec faculté de rotation en parcourant sa course de déplacement, par rapport à la douille (40) logeant ladite pièce, en correspondance avec une plage DWB d'angles de rotation > 0°.

6. Système (1) à chevilles d'arrêt, selon la revendication 5, **caractérisé par le fait**
**qu'**au moins une saillie radiale (133a, 133b) façonnée sur la pièce de préhension (41) est introduite, en position rétractée, dans au moins une rainure (134) et en particulier dans une rainure axiale (134) pratiquée au niveau de la douille (40) logeant ladite pièce et repose, en position déployée, sur une surface de contre-appui (137) située au niveau de ladite douille (40) logeant ladite pièce, ou inversement, sachant notamment que, dans ladite position déployée, ladite saillie radiale (133a, 133b) est pressée sur ladite surface de contre-appui (137) sous l'effet d'une force élastique.

7. Système (1) à chevilles d'arrêt, selon l'une des revendications 5 ou 6, **caractérisé par le fait qu'**en vue d'un changement opéré entre la position rétractée et la position déployée, la pièce de préhension (41) peut être mise axialement en retrait derrière ladite position déployée, par rapport à la douille (40) logeant ladite pièce, en s'éloignant de la position rétractée à partir de ladite position déployée.

8. Système (1) à chevilles d'arrêt, selon l'une des revendications précédentes, **caractérisé par le fait qu'**il est prévu un mécanisme (132) par lequel la pièce de préhension (41) peut être retenue automatiquement dans la position déployée,
sachant notamment que ladite pièce de préhension (41) peut être encliquetée dans ladite position déployée, au moyen dudit mécanisme (132).

9. Système (1) à chevilles d'arrêt, selon l'une des revendications 1 à 8, **caractérisé par le fait**
**que** la pièce de préhension (41) est munie d'au moins un espace de passage (90) par lequel au moins l'une des âmes (16) est guidée ;
par le fait que ladite pièce de préhension (41) est pourvue d'au moins un perçage taraudé de serrage (92) gagnant, depuis l'extérieur, ledit espace de passage (90) à présence minimale ;
et par le fait qu'au moins une vis de serrage (93) logée dans ledit perçage taraudé de serrage (92) à présence minimale bloque, dans ladite pièce de préhension (41), ladite âme (16) à présence minimale qui parcourt ledit espace de passage (90) à présence minimale,
sachant notamment que la pièce de préhension (41) est dotée d'un espace commun de passage (90) dans lequel les âmes (16) de toutes les tringleries Bowden (15a, 15b) s'étendent sous la forme d'un faisceau, que ladite pièce de préhension (41) est nantie d'un perçage taraudé commun de serrage (92) gagnant ledit espace commun de passage (90), depuis l'extérieur, et qu'une vis commune de serrage (93), logée dans ledit perçage taraudé commun de serrage (92), bloque conjointement les âmes (16) dudit faisceau dans ladite pièce de préhension (41).

10. Système (1) à chevilles d'arrêt, selon l'une des revendications 1 à 8, **caractérisé par le fait**
**que** la pièce de préhension (41) comprend un espace intérieur extrême (91) et au moins un espace de passage (90) qui mène audit espace intérieur extrême (91) à partir d'une ouverture située à la face frontale de ladite pièce de préhension (41) ;
par le fait qu'au moins l'une des âmes (16) est guidée pour parcourir ledit espace de passage (90) à présence minimale ;
et par le fait qu'au moins un mamelon fileté (64) est fixé à au moins l'une desdites âmes (16), lequel mamelon fileté (64) est disposé dans ledit espace intérieur extrême (91) et emprisonne, par-derrière, la pièce de préhension (41),
sachant notamment que ladite pièce de préhension (41) est dotée d'un espace commun de passage (90) dans lequel les âmes (16) de toutes les tringleries Bowden (15a, 15b) s'étendent sous la forme d'un faisceau, avec la présence d'un mamelon fileté commun (64) fixé au faisceau desdites âmes (16).

11. Système (1) à chevilles d'arrêt, selon l'une des revendications précédentes, **caractérisé par le fait**
**que** la pièce de préhension (41) inclut une partie axiale (53) et une partie principale (54), laquelle partie axiale (53) est mobile dans la douille (40) logeant ladite pièce de préhension,
sachant que ladite partie axiale (53) parcourt de part en part, par sa région extrême postérieure, ladite douille (40) logeant la pièce de préhension,
et sachant que ladite partie principale (54) est fixée à ladite partie axiale (53) au niveau de ladite région extrême postérieure de ladite partie axiale (53), en étant notamment rapportée par vissage.

12. Système (1) à chevilles d'arrêt, selon la revendication 11, **caractérisé par le fait**
**qu'**au moins un perçage taraudé de serrage (92) parcourt d'un trait la partie principale (54) et la partie axiale (53).

13. Système (1) à chevilles d'arrêt, selon l'une des revendications 11 ou 12, **caractérisé par le fait**
**que** la partie principale (54) comporte une partie (130) formant manchon et une partie de manipulation (131), qui sont fixées individuellement à la partie axiale (53) en étant notamment rapportées par vissage, ladite partie (130) formant manchon étant fixée, à ladite partie axiale (53), davantage en avant comparativement à ladite partie de manipulation (131),
sachant notamment qu'au moins perçage taraudé de serrage (92) parcourt ladite partie (130) formant manchon.

14. Système (1) à chevilles d'arrêt, selon l'une des revendications précédentes, **caractérisé par le fait**
**qu'**un espace intérieur (89) de la pièce de préhension (41) est accessible uniquement par une extrémité antérieure de ladite pièce de préhension (41), à partir de laquelle l'âme (16) à présence minimale est introduite.

15. Système (1) à chevilles d'arrêt, selon l'une des revendications précédentes, **caractérisé par le fait**
**qu'**une pièce structurelle de support (86), située au niveau d'une ouverture antérieure (87) de la douille (40) logeant la pièce de préhension, recouvre au moins partiellement ladite ouverture antérieure (87) de la douille (41) logeant ladite pièce de préhension ;
et par le fait que ladite pièce structurelle de support (86) donne naissance à au moins deux contre-butées (42a, 42b) agencées en juxtaposition et situées côté pièce de préhension, chaque contre-butée (42a, 42b), située côté pièce de préhension, comportant un évidement dévolu à la réception d'une extrémité postérieure (44) de venue en butée d'une gaine de câblage (17) de tringlerie Bowden et, au niveau d'un fond de ladite pièce structurelle de support (86), une discontinuité (88) affectée au passage traversant de l'âme (16) associée.

16. Système (1) à chevilles d'arrêt, selon la revendication 15, **caractérisé par le fait que** la pièce structurelle de support (86) est réalisée sous la forme d'un élément intégré de support (86a) qui est inséré, de préférence par vissage ou par pression, dans l'ouverture antérieure (87) de la douille (40) logeant la pièce de préhension.

17. Système (1) à chevilles d'arrêt, selon l'une des revendications précédentes, **caractérisé par le fait**
**que**, dans un ensemble respectif (3a, 3b) de chevilles d'arrêt, la cheville de blocage (2) est précontrainte, sous l'effet d'une force élastique, vers un emplacement déployé auquel ladite cheville de blocage (2) fait saillie, par une pointe antérieure (7), au-delà de la douille (5) logeant ladite cheville, et ladite cheville de blocage (2) peut être ramenée en arrière vers un emplacement rétracté, en opposition à ladite force élastique,
sachant que l'âme (16) de la tringlerie Bowden (15a, 15b) associée est guidée vers une extrémité postérieure de la cheville de blocage (2) en parcourant la douille (5) logeant ladite cheville, à partir d'une extrémité postérieure (35) de ladite douille (5) logeant la cheville, et sachant qu'un corps antérieur de couplage (21), fixé à ladite âme (16), est accroché à ladite cheville de blocage (2),
sachant qu'une saillie (31) pointant radialement vers l'extérieur est façonnée sur ladite cheville de blocage (2), en particulier dans une région située à l'arrière dans le sens axial, et qu'une zone en retrait (33) pointant radialement vers l'intérieur est façonnée sur la douille (5) logeant ladite cheville, en particulier dans une région située à l'avant dans le sens axial, ladite saillie (31) emprisonnant alors ladite zone en retrait (33), par-derrière dans le sens radial, ce qui a pour conséquence de limiter la faculté de déplacement axial de la cheville de blocage (2), dans la douille (5) logeant ladite cheville, en direction de l'emplacement déployé,
sachant que la douille (5) logeant la cheville est munie, à son extrémité postérieure, d'un perçage taraudé (37) dans lequel un élément fileté intégré (36) est vissé, lequel élément fileté intégré (36) limite directement ou indirectement la faculté de déplacement axial de la cheville de blocage (2), dans la douille (5) logeant ladite cheville, en direction de l'emplacement rétracté,
l'âme (16) étant également guidée à travers ledit élément fileté intégré (36),
et ledit élément fileté intégré (36) donnant naissance, directement ou indirectement, à une contre-butée (24) située côté cheville de blocage et dédiée à une extrémité antérieure (25) de venue en butée de la gaine de câblage (17) de la tringlerie Bowden (15a, 15b) associée.

18. Système (1) à chevilles d'arrêt, selon la revendication 17, **caractérisé par le fait qu'**un ressort de pression (6) est interposé axialement entre la cheville de blocage (2) et l'élément fileté intégré (36), en vue de développer la force élastique dans un espace intérieur (8) de la douille (5) logeant ladite cheville,
sachant, en particulier, que ledit ressort de pression (6) est directement en appui au niveau de l'extrémité postérieure de ladite cheville de blocage (2) et au niveau de l'extrémité antérieure dudit élément fileté intégré (36),
et sachant notamment que ledit ressort de pression (6) est réalisé sous la forme d'un ressort hélicoïdal ;
et **par le fait que** l'âme (16) est également guidée pour parcourir l'intégralité dudit ressort de pression (6).

19. Système (1) à chevilles d'arrêt, selon la revendication 17 ou 18, **caractérisé par le fait que** l'élément fileté intégré (36) présente un filetage intérieur (100) dans lequel un tronçon de tige (101a) d'une vis de contre-butée (101) est vissé, au moins partiellement, au niveau d'une extrémité postérieure dudit élément fileté intégré (36) ;
**par le fait que** la vis de contre-butée (101) est pourvue, à son extrémité postérieure, d'une coupelle (101b) matérialisant la contre-butée (24) située côté cheville de blocage et dédiée à l'extrémité antérieure (25) de venue en butée de la gaine de câblage (17) de tringlerie Bowden ;
et **par le fait que** l'âme (16) parcourt également l'intégralité d'un alésage axial (101c) de ladite vis de contre-butée (101).

20. Système (1) à chevilles d'arrêt, selon l'une des revendications 17 à 19, **caractérisé par le fait**
**que** la cheville de blocage (2) est de réalisation fermée dans la région de la pointe antérieure (7) de ladite cheville qui fait saillie, à l'emplacement déployé, au-delà de la douille (5) logeant ladite cheville ;
et par le fait que ladite cheville de blocage (2) donne naissance à une dépouille (140) ouverte latéralement, en vue de l'accrochage du corps antérieur de couplage (21),
sachant notamment que la dépouille (140) est de conception ouverte sur deux côtés
et sachant, en particulier, que ladite dépouille (140) s'étend, pour l'essentiel, transversalement par rapport à l'axe (BA) de ladite cheville.
